# EUROPEAN PATENT APPLICATION

(11) **EP 2 381 326 A2**
(43) Date of publication of application: **26.10.2011**
(21) Application number: 11162300.5
(22) Date of filing: 13.04.2011
(51) Int. Cl.: G05B 19/418

(54) **Systems and methods for synchronization of an external control system with fieldbus devices**

(30) Priority: 21.04.2010 US 764461
(71) Applicant: General Electric Company, Schenectady, NY 12345 (US)
(72) Inventor: Pettigrew, William Robert, Blackssburg, VA 24060 (US); Kreft, Dana Robert, Roanoke, VA 24015 (US)
(74) Representative: Bedford, Grant Richard

(57) **Abstract**

Systems 100 and methods 200 for synchronization of an external control system with Fieldbus devices 115 are described. A message including timing information for at least one Fieldbus device 115 in direct or indirect communication with a controller 105 may be received by the controller. Based upon information included in the received message, the controller may determine a start time for a current operation cycle of the at least one Fieldbus device 115. The controller 105 may then utilize the start time and a duration of the current operation cycle to determine a specific time at which the controller 105 will execute control functionality for the at least one Fieldbus device 115 such that a control message output by the controller 105 will be received by the at least one Fieldbus device 115 within the current operation cycle.

## Description

Various embodiments of the invention relate generally to control systems and more specifically to the synchronization of Fieldbus devices with an external control system.

Control systems are utilized in a wide variety of different applications. For example, control systems are utilized in conjunction with power generating devices, in power plants, and/or in process plants. A control system typically includes a central controller in communication with other components of the control system, for example, sensors, measurement devices, valves, etc. The central controller typically communicates with the other components via suitable network communications.

With the development and adoption of the Foundation Fieldbus standard, Fieldbus devices have been incorporated into control systems. Typically, the Fieldbus devices are configured to perform their standard operations within a macrocyle or other operation cycle. The operation cycle of a Fieldbus device is often much greater than an operation cycle of an external controller, such as a central controller in a power plant. Given this asynchronous operation, timing discrepancies may exist between the controller and the Fieldbus devices. Additionally, communications and/or instructions output by the controller for a Fieldbus device may be received as much as two macrocycles behind the cycle in which operating data was provided to the controller by the Fieldbus device. Accordingly, improved systems and methods for synchronization of Fieldbus devices with an external controller or an external control system would be desirable.

Some or all of the above needs and/or problems may be addressed by certain embodiments of the invention. Embodiments of the invention may include systems and methods for the synchronization of Fieldbus devices with an external control system. According to one embodiment of the invention, there is disclosed a method for synchronizing control of Fieldbus devices. A controller that includes one or more computers may receive a message that includes timing information for at least one Fieldbus device in direct or indirect communication with the controller. Based upon information included in the received message, the controller may determine a start time for a current operation cycle of the at least one Fieldbus device. Based upon the start time and a duration of the current operation cycle, the controller may determine a specific time at which the controller will execute control functionality for the at least one Fieldbus device such that a control message output by the controller will be received by the at least one Fieldbus device within the current operation cycle.

According to another embodiment of the invention, there is disclosed a control system. The control system may include at least one memory and at least one processor. The at least one memory may be configured to store computer-executable instructions. The at least one processor may be configured to access the at least one memory and execute the computer-executable instructions to: receive a message including timing information for at least one Fieldbus device in direct or indirect communication with the processor; determine, based upon information included in the received message, a start time for a current operation cycle of the at least one Fieldbus device; and determine, based upon the start time and a duration of the current operation cycle, a specific time at which control functionality for the at least one Fieldbus device will be executed such that a control message output by the at least one processor will be received by the at least one Fieldbus device within the current operation cycle.

Additional systems, methods, apparatus, features, and aspects are realized through the techniques of various embodiments of the invention. Other embodiments and aspects of the invention are described in detail herein and are considered a part of the claimed invention. Other embodiments and aspects can be understood with reference to the description and the drawings.

Having thus described the invention in general terms, reference will now be made to the accompanying drawings, which are not necessarily drawn to scale, and wherein:
FIG. 1 is a schematic diagram of one example control system that may be utilized in accordance with various embodiments of the invention.
FIG. 2 is a flow chart of one example method for synchronizing Fieldbus devices and an external control system, according to an illustrative embodiment of the invention.
FIG. 3 is an illustration of one example synchronization that may be achieved in accordance with various embodiments of the invention.
FIG. 4 is a flow chart of one example method for communicating a command received from an external computer to a Fieldbus device, according to an illustrative embodiment of the invention.
FIG. 5 is a flow chart of one example method for facilitating the writing of a value to a Fieldbus device by an external computer, according to an illustrative embodiment of the invention.
FIG. 6 is a flow chart of one example method for identifying Fieldbus devices within a control system, according to an illustrative embodiment of the invention.
FIG. 7 is a flow chart of one example method for updating a list of Fieldbus devices within a control system, according to an illustrative embodiment of the invention.
FIG. 8 is an illustration of one example presentation of connected Fieldbus devices that may be generated in accordance with various embodiments of the invention.
FIG. 9 is a schematic diagram of one example control system that may be utilized in accordance with various embodiments of the invention.
FIG. 10 is a flow chart of one example method for facilitating communication between one or more Fieldbus devices and an external control system, according to an illustrative embodiment of the invention.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout. Disclosed are systems and methods for synchronizing the control of Fieldbus devices within a control system. More specifically, systems and methods for the synchronization of an external controller or control system with one or more Fieldbus devices are disclosed. A controller and any number of Fieldbus devices may be provided. The controller may be in direct or indirect communication with each Fieldbus device. For example, the controller may communicate with one or more Fieldbus devices via one or more suitable linking devices. In operation, a controller may receive a message including timing information for at least one Fieldbus device. For example, the controller may receive a message from a linking device. Based upon information included in the received message, such as current timing information for one or more segments associated with a linking device, the controller may determine a start time for a current operation cycle (e.g., a current macrocycle) of a Fieldbus device or group of Fieldbus devices. The controller may additionally identify or determine a duration of the current operation cycle, for example, by accessing duration information from a suitable memory device. Based upon the start time and duration of the operation cycle, the controller may determine a specific time or a point in time at which the controller will execute control functionality for the Fieldbus device or group of devices. For example, the controller may determine an offset from a current time. Once the determined specific time is reached, the controller may process any inputs received from the Fieldbus device(s) and/or perform other control processing for the Fieldbus device(s). The controller may then output any number of control messages and/or data for communication to the Fieldbus device(s). According to an aspect of the invention, the output messages may be received by the Fieldbus device(s) within the current operation cycle of the device(s). In this regard, the controller and the Fieldbus device(s) may be synchronized.

As desired in certain embodiments, the controller may also facilitate communication with one or more Fieldbus devices. For example, the controller may facilitate communication between an external computer, such as a human machine interface (HMI) computer and a Fieldbus device. In this regard, the controller may receive commands formatted in accordance with a protocol other than a Fieldbus protocol from the HMI computer, generate commands formatted in accordance with the Fieldbus protocol, and output the generated commands for communication to one or more Fieldbus devices. For example, the controller may function as a gateway device that facilitates the reading and/or writing of Fieldbus data values and/or variables by the HMI computer. As one example, to facilitate the writing of a value to a Fieldbus device, the controller may receive a first command from an HMI computer directing that a value be written to a Fieldbus device. The controller may identify the Fieldbus device and generate, based upon information included in the first command, a second command formatted in accordance with the Fieldbus protocol. The second command may then be communicated to the identified Fieldbus device in order to complete the writing of the desired value.

Additionally, in certain embodiments, the controller may dynamically identify Fieldbus devices that are connected in a control system. For example, the controller may receive one or more messages, such as annunciation messages, from one or more respective Fieldbus linking devices. Each received message may include information associated with a plurality of segments for the respective linking device. Each of these segments may provide a communications channel to which Fieldbus devices may be connected to the linking device. The controller may analyze or parse each received message in order to identify one or more of the active segments for each linking device to which at least one Fieldbus device is connected. The controller may then generate a respective query message for each identified active segment in order to request information associated with the one or more Fieldbus devices connected to the segment. In response to communicating the query messages to the active segments, the controller may receive any number of responses that include information associated with the connected Fieldbus devices. As desired, the controller may then generate and communicate respective device query messages to any number of the connected Fieldbus devices in order to obtain more detailed information for the Fieldbus devices. Once information is collected by the controller, the controller may prepare one or more lists of the Fieldbus devices connected in the control system and/or various graphical presentations associated with the connected Fieldbus devices. The prepared lists and/or presentations may then be transmitted to any number of suitable recipients, such as a workstation computer utilized by an operator of the control system.

In certain embodiments, a plurality of redundant linking devices may be provided in order to facilitate communication between the Fieldbus devices and the controller. For example, a primary linking device and a secondary linking device may be provided. The primary linking device may detect a loss in network connectivity with the controller and direct a switching or switchover of communications control to the secondary linking device. In certain embodiments, the switching may be directed based upon an additional determination that network connectivity exists between the secondary linking device and the external controller. As desired in certain embodiments, the secondary linking device may be established as a primary device following the switchover.

Various embodiments of the invention may include one or more special purpose computers, systems, and/or particular machines that facilitate the synchronization of Fieldbus devices and an external controller or control system. In certain embodiments, one or more special purpose computers, systems, and/or particular machines that facilitate communication between an external computer and one or more Fieldbus devices may also be provided. Additionally, in certain embodiments, one or more special purpose computers, systems, and/or particular machines that facilitate the dynamic identification of Fieldbus devices that are connected and/or active within a control system may be provided. A special purpose computer or particular machine may include a wide variety of different software modules as desired in various embodiments. As explained in greater detail below, in certain embodiments, these various software components may be utilized to process timing information associated with Fieldbus devices and to synchronize an external controller and the Fieldbus devices.

Certain embodiments of the invention described herein may have the technical effect of facilitating the synchronization of Fieldbus devices and an external controller or control system. Additionally, certain embodiments of the invention may have the technical effect of processing data received from a Fieldbus device, performing control functionality for the Fieldbus device, and outputting one or more control messages to the Fieldbus device within a single operation cycle or macrocycle of the Fieldbus device. In this regard, the operations of the Fieldbus device and an external controller may be synchronized. Additionally, certain embodiments of the invention may have the technical effect of facilitating communication between an external computer, such as a HMI computer associated with a control system, and one or more Fieldbus devices. For example, commands received from an external computer may be processed in order to generate or produce commands that may be communicated to one or more Fieldbus devices. Indeed, certain embodiments may have the technical effect of receiving commands formatted in accordance with a non-Fieldbus protocol and generating commands formatted in accordance with a Fieldbus protocol for output to one or more Fieldbus devices. As desired, certain embodiments of the invention described herein may also have the technical effect of facilitating the dynamic identification of Fieldbus devices that are connected to and/or within a control system.

Further, certain embodiments of the invention may have the technical effect of facilitating communication between Fieldbus devices and an external controller. Network connectivity between an external controller and a plurality of linking device may be monitored switching of communications control from a first linking device to a second linking device may be facilitated. In this regard, network connectivity between an external controller and Fieldbus devices may be maintained even if network connectivity with one or more linking devices that facilitate communications between the controller and the Fieldbus devices is lost.

Various embodiments of the invention incorporate Foundation Fieldbus-type (hereinafter "Fieldbus") devices into control systems, for example, control systems associated with power generating devices (e.g., gas turbines, steam turbines, wind turbines, etc.), power plants, and/or process plants. A wide variety of Fieldbus devices may be utilized as desired in various embodiments of the invention. Examples of Fieldbus devices include but are not limited to sensors, gauges, measurement devices, valves, actuators, input/output subsystems, host systems, linking devices, any suitable Fieldbus H1 devices, and/or any suitable Fieldbus highspeed Ethernet (HSE) devices. In certain embodiments, H1 devices may operate and/or communicate at a different rate than HSE devices. As one example, H1 devices may operate at approximately 31.25 kilobits per second, and HSE devices may operate at approximately 100 megabits per second. As desired, various HSE devices, such as linking devices, may be utilized to interconnect H1 devices to a central controller of the control system. Additionally, the term HSE protocol may be utilized to refer to a Fieldbus protocol that facilitates communications with HSE Fieldbus devices.

Communications between Fieldbus devices and/or between one or more controllers and/or processors of the control system and the Fieldbus devices may be facilitated by utilizing a Fieldbus protocol. The Fieldbus protocol is an all-digital serial, two-way communication protocol that provides a standardized physical interface to a bus or network interconnecting field equipment or Fieldbus devices. The Fieldbus protocol is an open-architecture protocol developed and administered by the Fieldbus Foundation. The Fieldbus protocol provides, in effect, a local area network for field instruments or field devices within a plant or facility, which enables these field devices to perform control functions at locations distributed throughout the facility and to communicate with one another before and after the performance of these control functions to implement an overall control strategy. Because the Fieldbus protocol enables control functions to be distributed throughout a process control network, it may reduce the workload of a central controller.

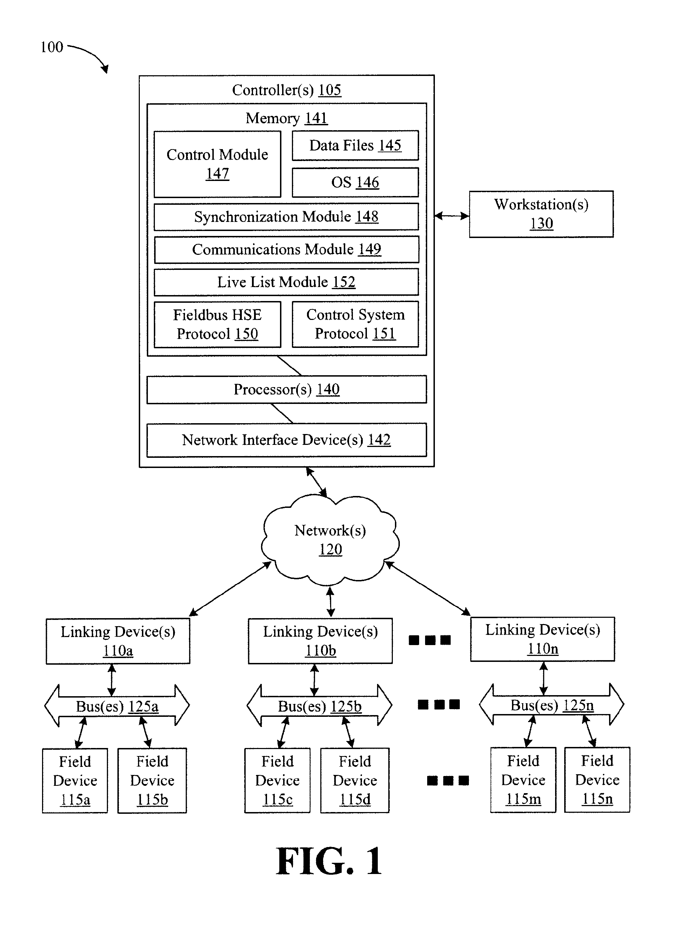

FIG. 1 is a block diagram of one example control system 100 that may be utilized in accordance with various embodiments of the invention. The control system 100 may include one or more controllers 105 (e.g., central controllers) and/or control devices, one or more linking devices 110a-n, and/or one or more Fieldbus devices 115a-n. The controller 105 may communicate with the linking devices 110a-n via one or more suitable networks 120 or communications buses. Additionally, the linking devices 110a-n may communicate with the various Fieldbus devices 115a-n via one or more suitable buses 125a-n or networks.

As desired, any number of linking devices 110a-n may be utilized in association with the control system 100. The linking devices 110a-n may be devices that are capable of communicating via a Fieldbus network or bus and via one or more relatively higher speed networks that facilitate communications with the controller 105. For example, a linking device (generally referred to as linking device 110) may be a HSE Fieldbus device or a combination HSE/H1 device. As such, the linking device 110 may be capable of communicating with the controller 105 via a suitable Ethernet network or other suitable network. Additionally, the linking device 110 may be capable of communicating with connected Fieldbus devices 115a-n via one or more Fieldbus networks and/or data buses. As desired, the linking devices 110a-n may facilitate communication between the controller 105 and the Fieldbus devices 115a-n. Alternatively, in other embodiments, a Fieldbus device 115 may be in direct communication with the controller 105 via a suitable network 120 or bus 125.

A linking device 110 may include any number of segments and/or connections to which a Fieldbus data bus 125 or local Fieldbus network may be connected. For example, in certain embodiments, a linking device 110 may include four (4) segments, although any other number of segments may be included as desired. Each segment may establish a separate communications channel and be configured to facilitate communications between the linking device 110 and the Fieldbus devices connected to the segment.

In operation, a linking device 110 may be configured to transmit or communicate a message including timing information to the controller 105. In certain embodiments, a message may be periodically communicated. The period for the communications may be a default time period or a period that is established by one or more user preferences. Additionally, a wide variety of suitable time periods may be utilized as desired, such as a period of approximately five hundred (500) milliseconds. In other embodiments, a message may be communicated to a controller 105 in response to a request for the message. According to an aspect of the invention, a communicated message may include timing information associated with the segments of the linking device 110 and/or the Fieldbus devices connected to the segment. For example, a message may include a current operation time of the segment and/or connected Fieldbus device within a current macrocycle or other operation cycle. As desired, the message may include a wide variety of additional information, such as a duration of the operation cycle. As an alternative to receiving a message from a linking device 110, a message may be received directly from a Fieldbus device 115 in certain embodiments of the invention.

With continued reference to FIG. 1, any number of Fieldbus devices 115a-n may be utilized in association with the control system 100. In certain embodiments, each Fieldbus device (generally referred to as device 115) may be in communication with a linking device 110 via a local Fieldbus network or data bus 125. In this regard, communications between the Fieldbus device 115 and the controller 105 may be facilitated by the linking device 110. In other embodiments, a Fieldbus device 110 may be in direct communication with a controller 105. A wide variety of different types of Fieldbus devices may be utilized as desired in various embodiments of the invention, including any number of H1 Fieldbus devices and/or other suitable devices. In certain embodiments, the Fieldbus devices 115a-n may be distributed or situated at varying points within a power plant or process plant. In this regard, the Fieldbus devices 115a-n may be utilized to monitor and/or control various aspects and/or operations of a plant.

In certain embodiments, communications between the linking devices 110a-n and the Fieldbus devices 115a-n may be facilitated using the Fieldbus protocol. Additionally, communications between the linking devices 110a-n and the controller 105 may be facilitated using the Fieldbus protocol.

According to an aspect of the invention, a segment of a linking device 110 and the Fieldbus devices connected to that segment may be configured to operate in accordance with an operation cycle, such as a Fieldbus macrocycle. For example, a Fieldbus macrocycle may define a total execution time for the logic within a segment. In certain embodiments, the duration or length of the operation cycle may be configured or set by a user or technician. In other embodiments, the duration of the operation cycle may be dynamically determined and/or established. As desired, a minimum duration of the operation cycle may be defined based at least in part on a latency and/or operation speed of a slowest device connected to the segment. As an alternative to establishing an operation cycle for a segment of a linking device 110, an operation cycle may be established for an individual Fieldbus device or group of Fieldbus devices in a similar manner.

Any number of operation cycles may be established as desired in various embodiments of the invention. For example, a respective operation cycle may be established for each segment of each linking device 110a-n. In certain embodiments, once a duration of an established operation cycle has been established or determined, the duration may be communicated to and/or stored by the controller 105.

In certain embodiments, a Fieldbus device 115 connected to a segment (or directly connected to the controller 105) may be operable or configured to communicate measurements data, events data, and/or any other suitable data associated with the operation of the Fieldbus device 115 to the controller 105. According to an aspect of the invention, the Fieldbus device 115 may be configured to output data during the relevant operation cycle such that the data may be received and processed by the controller 105 during the same operation cycle. Additionally, the data may be output such that any control signals or other messages associated with the processing of the data by the controller 105 may be received by the Fieldbus device 115 during the operation cycle. In this regard, the operations of the Fieldbus device 115 and the controller 105 may be synchronized.

With continued reference to FIG. 1, the one or more illustrated networks 120 may include any suitable network or combination of networks that facilitate communications between the linking devices 110a-n and the controller 105. Similarly, the Fieldbus data buses 125a-n or networks may include any number of suitable data buses and/or local area networks that facilitate communication between a linking device 110 and Fieldbus devices that are connected to the linking device 110. Examples of suitable networks and/or data buses include, but are not limited to, a local area network, a wide area network, the Internet, a radio frequency (RF) network, a Bluetooth™ enabled network, any suitable wired network, any suitable wireless network, or any suitable combination of wired and wireless networks. In certain embodiments of the invention, such as embodiments that utilize an Ethernet network, one or more Ethernet switches may be provided. The Ethernet switches may route data within the network 120. Each of the Ethernet switches may include hardware and/or software components that are operable to facilitate the routing of data within the network 120. Examples of suitable Ethernet switches include, but are not limited to, network bridges, multilayer switches, etc.

As desired in various embodiments of the invention, redundant components may be provided within the network 120 and/or the system 100. For example, redundant wiring, switches, and/or routers may be provided. Additionally, in certain embodiments redundant linking devices 110a-n and/or segments may be provided. In this regard, adequate operations may be maintained within the control system 100 in the event of failure of network device.

With continued reference to FIG. 1, the control system 100 may include a controller 105, such as a central controller. Some examples of suitable controllers are a Mark™ VI control system and a Mark™ Vie control system produced by the General Electric Company. The controller 105 may be configured to communicate with and/or control other components of the control system 100 and/or components of the plant or system that is controlled by the control system 100. Additionally, the controller 105 may be configured to receive data associated with the operation of the Fieldbus devices 115a-n and/or the linking devices 110a-n, to process at least a portion of the received data, and/or to output one or more control signals or other messages for receipt by any number of linking devices 110a-n and/or Fieldbus devices 115a-n. According to an aspect of the invention, the controller 105 may determine one or more specific times at which received data associated with the operation of the Fieldbus devices 115a-n will be processed in order to facilitate synchronization of the Fieldbus devices 115a-n and the controller 105.

The controller 105 may include any number of processor driven devices that control the operations of the control system 100. For example, the controller 105 may include any number of special purpose computers or particular machines, application specific circuits, programmable logic controllers (PLC), microcontrollers, personal computers, minicomputers, mainframe computers, supercomputers, and the like. In certain embodiments, the operations of the controller 105 may be controlled by computer-executed or computer-implemented instructions that are executed by one or more processors associated with the controller 105. The instructions may be embodied in one or more software components as desired in various embodiments of the invention. The execution of the instructions may form a special purpose computer or other particular machine that is operable to control the operations of the control system 100 and/or to facilitate the synchronization of the controller 105 with the Fieldbus devices 115a-n. The one or more processors that control the operations of the controller 105 may be incorporated into the controller 105 and/or in communication with the controller 105 via one or more suitable networks. In certain embodiments of the invention, the operations and/or control of the controller 105 may be distributed amongst several processing components.

The controller 105 may include one or more processors 140, one or more memory devices 141, and one or more network interface device(s) 142. The one or more memory devices 141 may be any suitable memory devices, for example, caches, read only memory devices, random access memory devices, magnetic storage devices, etc. The one or more memory devices 141 may store data, executable instructions, and/or various program modules utilized by the controller 105, for example, data 145 associated with the operation of the control system, linking devices 110a-n, and/or Fieldbus devices 115a-n, an operating system 146, a control module 147, a synchronization module 148, a communications module 149, and/or a live list module 152. Additionally, the memory 141 may be operable to store a Fieldbus or HSE protocol 150 and/or a second control system protocol 151 that facilitates communication with other components of the control system 100, such as one or more workstations 130 at which an operator may be presented with information associated with the control system operation and/or enter user commands. The data 145 may include any suitable data associated with the operation of the control system 100 and/or the operation of the plant or system monitored by the control system 100, for example, measurements data, operating data, data associated with the operation of one or more linking devices 110a-n, data associated with the operation of one or more Fieldbus devices 115a-n, data associated with one or more operation cycles or macrocycles for the linking devices 110a-n and/or Fieldbus devices 115a-n, etc. The operating system (OS) 146 may include executable instructions and/or program modules that facilitate and/or control the general operation of the central controller 105. For example, the OS 146 may facilitate the execution of other software programs and/or program modules by the processors 140.

The control module 147 may be operable to monitor and/or control the overall operations of the control system 100 and/or the plant or system that is monitored and/or controlled by the control system 100. In doing so, the control module 147 may utilize various measurements and/or other data associated with the operation of the control system 100 and/or the monitored plant or system. At least a portion of the utilized data may be received from the Fieldbus devices 115a-n either directly or via the linking devices 110a-n. The control module 147 may be further operable to generate command signals associated with the operation of the control system 100 and to direct the communication of the generated signals to other components of the control system 100, for example, to the Fieldbus devices 115a-n. For example, the control module 147 may be operable or configured to process data received from one or more Fieldbus devices 115a-n and direct the communication of generated control signals or other messages to the Fieldbus devices 115a-n.

The synchronization module 148 may be operable to or configured to synchronize the operations and/or processing of the controller 105 and the Fieldbus devices 115a-n. According to an aspect of this invention, the synchronization module 148 may identify one or more specific times at which the controller 105 will execute control functionality and/or processing for one or more respective Fieldbus devices and/or groups of Fieldbus devices such that control signals and other messages generated and/or output by the controller 105 will be received by the Fieldbus devices within one or more relevant current operation cycles of the Fieldbus devices.

In one example embodiment, the synchronization module 148 may receive timing information associated with a Fieldbus device 115 or a group of Fieldbus devices, such as a group of Fieldbus devices that are connected to the same segment of a linking device 110 or to a same data bus 125. A wide variety of timing information may be received as desired in various embodiments of the invention. In one example embodiment, information associated with a current time within a current operation cycle or macrocycle may be received. In another example embodiment, information associated with a start time for a current operation cycle may be received. In certain embodiments, the timing information may be received in a synchronization message or a timing message that is output by a linking device 110 or a Fieldbus device 115. For example, a linking device 110 may output a timing or synchronization message that includes respective timing information for each of the segments of the linking device 110. As desired in certain embodiments, a timing or synchronization message may be periodically output for receipt by the controller 105. In other words, a linking device 110 or Fieldbus device 115 may be configured to periodically output timing data at a predetermined interval or time. For example, timing data may be output at or near the start of an operation cycle or macrocycle for receipt by the controller 105.

Once timing information is received for a segment or Fieldbus device 115, the synchronization module 148 may utilize the timing information in order to determine a start time of a current operation cycle associated with the segment or device 115. For example, the synchronization module 148 may determine a start time of the current operation cycle by subtracting a timing value included in the timing information (e.g., a value representing a current time within the operation cycle) and, as desired, an estimated network delay time, from a current time (e.g., a clock time) associated with the controller 105. Additionally, the synchronization module 148 may access or obtain information associated with the operation cycle of the segment or device 115, such as a duration of the operation cycle. For example, the synchronization module 148 may access duration data from a suitable memory associated with the controller 105. As another example, the synchronization module 148 may identify duration information that is included in the received timing information and/or in another received message.

Once a start time for the operation cycle is determined, the synchronization module 148 may utilize the determined start time and the duration information for the operation cycle in order to determine a specific time at which controller functionality should be executed by the control module 147 for the segment or Fieldbus device 115. For example, a timing offset for executing controller functionality or a specific clock value at which controller functionality should be executed may be determined. The determined specific time may be a time at which control operations for the segment or device 115 will be performed such that any control signals or other messages output by the controller 105 will be received by the Fieldbus device 115, the segment, and/or any devices connected to the segment within the current operation cycle. In this regard, the operations of the controller 105 and connected Fieldbus devices 115a-n may be synchronized. Additionally, any differences between the operating rates of the controller 105 and the connected Fieldbus devices 115a-n may be taken into account. Once the determined specific time is reached, the control module 147 may execute controller functionality for the Fieldbus device 115, the segment, and/or any devices connected to the segment. In doing so, the control module 147 may process any inputs that are received from the segment and/or Fieldbus device 115 (e.g., measurements data, event data, etc.) and/or generate any number of suitable control signals and/or other messages for output to the Fieldbus device 115, the segment, and/or any devices connected to the segment. The control module 147 may then direct the communication of any generated signals and/or messages to designated recipients.

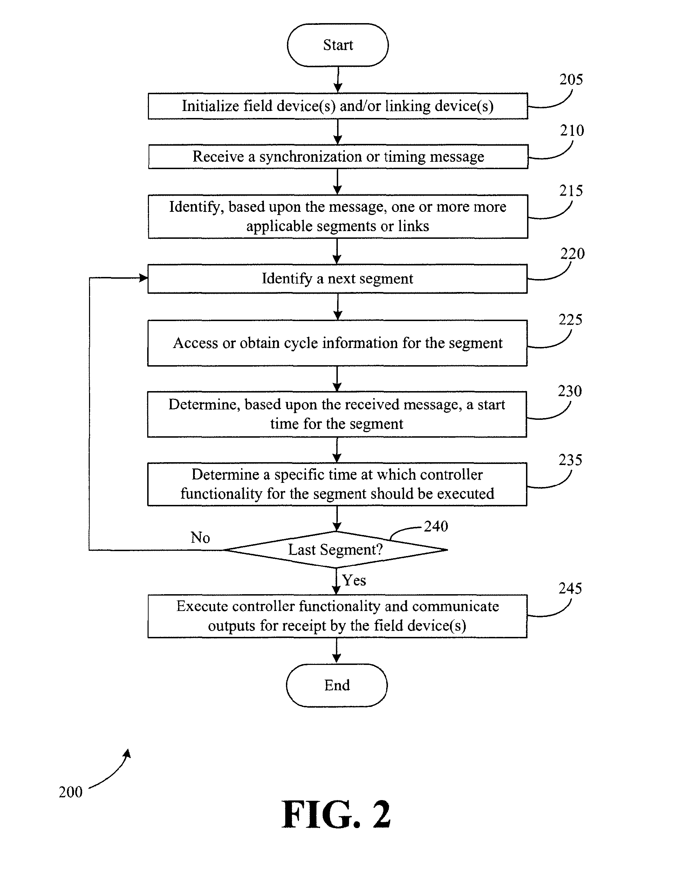

An example of the operations that may be performed by the synchronization module 148 to synchronize the controller 105 and the Fieldbus devices 115a-n is set forth in greater detail below with reference to FIG. 2.

The communications module 149 may be operable to format and/or generate communications to be transmitted over the network 120 and/or communications to be transmitted to the workstations 130. Additionally, the communications module may be operable to receive communications that have been transmitted to the central controller 105, such as communications received from the workstations 130, the linking devices 1 10a-n, and/or the Fieldbus devices 115a-n, and to extract and process data from the received communications. The communications module may utilize both the Fieldbus or HSE protocol 150 and/or one or more other protocols, such as the control system or second protocol 151, during the formatting of communications. According to an aspect of the invention, the communications module 149 may be operable to facilitate communications between the workstations 130 and the Fieldbus devices 115a-n. For example, the communications module 149 may be configured to receive commands from the workstations 130 that are associated with one or more Fieldbus devices 115a-n. In one example embodiment, a user of the workstations 130 may input one or more commands associated with the operation of the Fieldbus devices 115a-n, such as a command to modify a mode of operation of a Fieldbus device 115, and the input commands may be communicated to the controller 105 for processing by the communications module 149 and/or the control module 147. The received commands may be formatted in accordance with a protocol other than the Fieldbus protocol. Once a command, such as a command to read or write a value to a Fieldbus device, is received, the communications module 149 may identify the command as a command for a Fieldbus device 115. For example, the communications module 149 may identify a variable associated with or referenced by the received command as a variable associated with the Fieldbus device 115 by comparing the variable included in the command to stored information associated with variables for the Fieldbus devices 115a-n. In one example, embodiment, a variable included in a received command may be utilized to access and/or search a data repository of variables for the Fieldbus devices 115a-n, such as a look up table of variables or a database of variables. In this regard, a Fieldbus device 115 associated with the received command may be identified.

Once a Fieldbus device 115 associated with the received command is identified, the communications module 149 may convert or translate the received command into a command that is formatted in accordance with the Fieldbus protocol. In certain embodiments, the communications module 149 may utilize at least a portion of the information included in the received command to generate a second command formatted in accordance with the Fieldbus protocol. As desired, the communications module 149 may additionally utilize a portion of the stored data 145, such as a stored memory address for a variable associated with the command, in order to generate the second command. For example, the generated second command may include memory address information for a Fieldbus device 115 at which a variable or parameter to be modified is stored. Once generated, the communications module 149 may direct the communication of the second command to the identified Fieldbus device 115. In this regard, the communications module 149 may function as a gateway module that facilitates communications between the non-Fieldbus workstations 130 and the Fieldbus devices 115a-n.

In addition to processing commands received from the workstations 130, the communications module 149 and/or the control module 147 may be operable to receive information from the Fieldbus devices 115a-n and communicate at least a portion of the received information to the workstations 130 for presentation to a user. For example, a Fieldbus device 115 may communicate information associated with the operation of the Fieldbus device 115, such as values of one or more operating variables and/or parameters for the Fieldbus device 115, measurements data, calculations, and/or other data to the controller 105. In certain embodiments, information may be communicated by a Fieldbus device 115 to the controller 105 in real time or near real time. In other embodiments, information may be periodically communicated by the Fieldbus device 115 to the controller 105 at a suitable predetermined time interval. In other embodiments, information may be communicated by the Fieldbus device 115 to the controller 105 in response to a request for the information, such as a request or command to read the value of an operating variable associated with the Fieldbus device 115. In yet other embodiments, information may be communicated by the Fieldbus device 115 to the controller 105 based upon the identification of a triggering event by the Fieldbus device 115, such as an identified change of an operating variable or a determination that a measurement value falls outside of a threshold value or range of threshold values. Communications by the Fieldbus device 115 to the controller 105 may be formatted in accordance with the Fieldbus protocol.

Once received, at least a portion of the information may be utilized by the communications module 149 to generate a message formatted in accordance with a protocol other than the Fieldbus protocol (e.g., an EGD protocol). The communications module 149 may then direct the output of the generated message for communication to the workstations 130. In this regard, information received from a Fieldbus device 115 may be converted or translated into a protocol or language associated with the workstations 130 and communicated to the workstations 130 for display to a user. A user of the workstation 130 may then view the displayed information and determine whether any changes in the operation of the Fieldbus device 115 are desired. If a change is desired, the user may utilized the workstation 130 to communicate a command to the controller 105 as described in greater detail above.

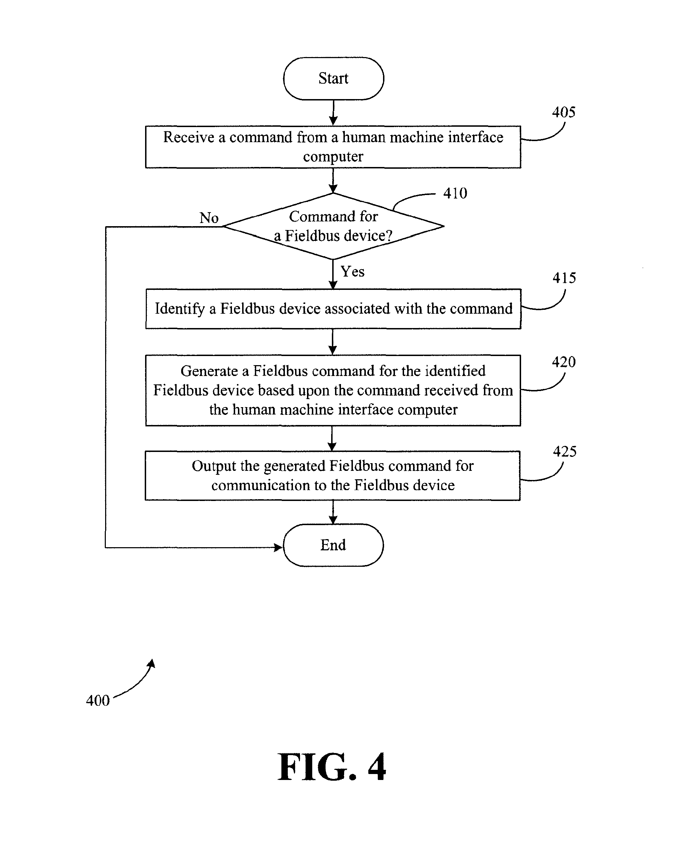

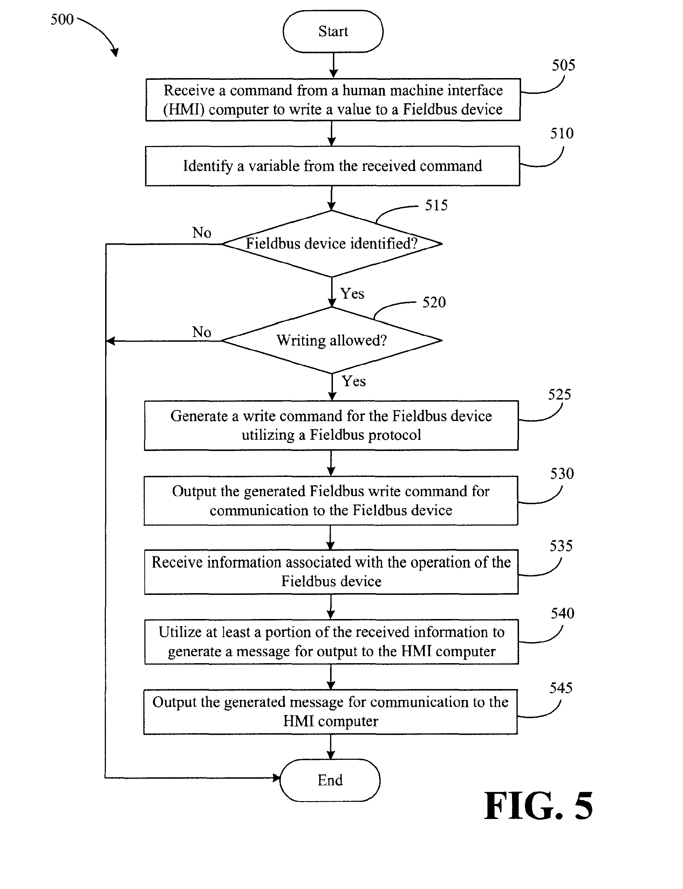

An example of the operations that may be performed by the communications module 149 to facilitate communications between the workstations 130 and one or more Fieldbus devices 115a-n is set forth in greater detail below with reference to FIGS. 4 and 5.

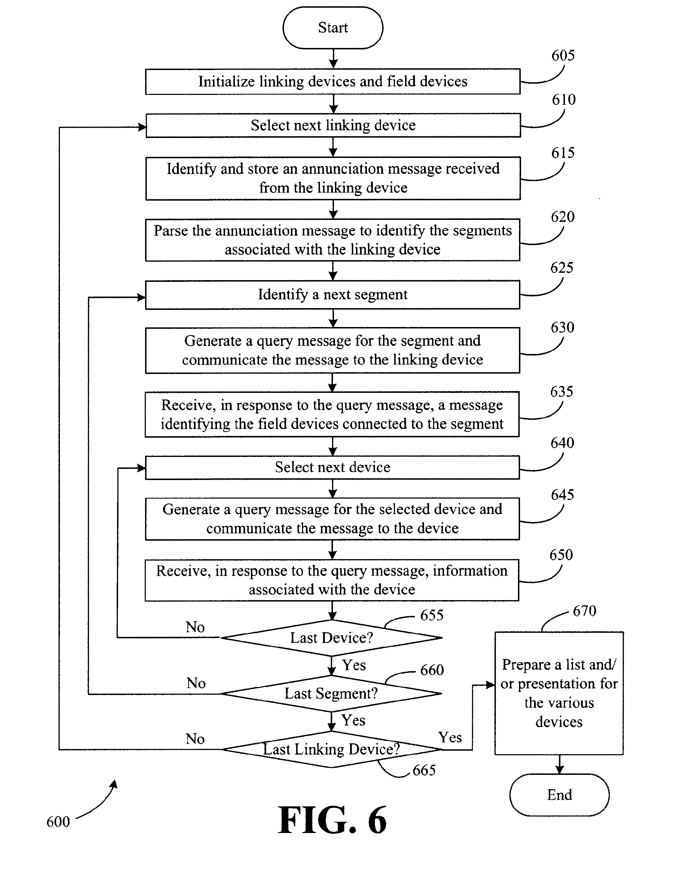

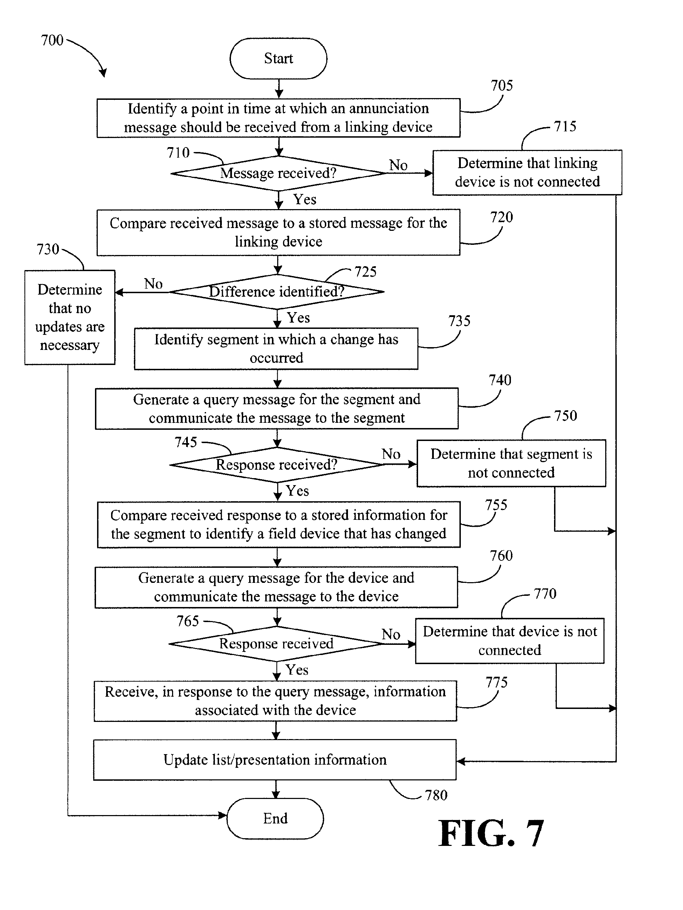

The live list module 152 may be operable to dynamically generate and/or maintain a list of linking devices 110a-n, segments, and/or Fieldbus devices 115a-n that are connected within the control system 100. In certain embodiments, the live list module 152 may be operable to generate and/or update a list of devices based upon the receipt of respective annunciation messages or status messages from various linking devices 110a-n and the evaluation of the received messages. For example, newly connected and/or disconnected devices may be identified by comparing a received annunciation message to a previously received annunciation message. In this regard, a list of connected devices maintained in near real time in certain embodiments of the invention. An example of the operations that may be performed by the live list module 152 to generate a list of connected Fieldbus devices 115a-n and to dynamically maintain and/or update the list is set forth in greater detail below with reference to FIGS. 6 and 7. In addition to generating and/or maintaining a list of connected devices, the live list module 152 may generate a wide variety of presentations, such as graphical displays and/or graphical user interfaces, associated with connected devices. As desired, the live list module may direct the communication of generated lists and/or presentations to one or more recipient devices, such as the workstations 130 for display to an operator of the control system 100.

With continued reference to FIG. 1, the network interface devices 144 may facilitate connection of the controller 105 to the network 120 and/or to the workstations 130. The network interface devices 144 may include any number of input/output cards (e.g., Ethernet cards) and/or other devices that facilitate network communications.

In certain embodiments of the invention, one or more workstations 130 may be provided. As desired, these workstations 130 may provide a human machine interface (HMI) between the control system 100 and one or more operators of the control system 100. For example, the workstations 130 may facilitate the receipt of user input and/or user commands associated with the operation of the control system 100. Additionally, the workstations 130 may be configured to receive data from the controller 105, such as presentations and/or other information associated with the connected Fieldbus devices 115a-n. The workstations 130 may further be configured to display at least a portion of the received data to a user via a suitable display device, such as a monitor. In this regard, various data values associated with the operation of the Fieldbus devices 115a-n may be communicated to the workstations 130 for display to a user.

In certain embodiments, the workstations 130 may facilitate the receipt of user input associated with a command to be communicated to a Fieldbus device 115. For example, a command to write a value to a memory of a Fieldbus device 115 may be input into and/or generated by the workstations 130. An input or generated command may be communicated by the workstations 130 to the controller 105. The controller 105 may process a received command and facilitate the communication of the command to the Fieldbus device 115. In certain embodiments, the controller 105 may receive a command formatted in accordance with a non-Fieldbus protocol, utilize the received command to generate a command formatted in accordance with a Fieldbus protocol, and output the generated command for receipt by the Fieldbus device 115. In this regard, the controller may facilitate communication between the workstations 130 and the Fieldbus devices 115a-n. For example, the controller 105 may facilitate reading and/or writing values to and/or from the Fieldbus devices 115a-n by the workstations 130.

The workstations 130 may include one or more suitable computers or computing devices, such as personal computers, hand-held computing devices, mini-computers, etc. Additionally, the workstations 130 may be in communication with the controller 105 via one or more suitable network connections, for example, a direct link or direct connection, a local area network, a wide area network, the Internet, a radio frequency (RF) network, a Bluetooth™ enabled network, any suitable wired network, or any suitable wireless network. In this regard, user commands, instructions, and/or other input associated with the operation of the control system 100 may be received by the workstations 130 and communicated to the controller 105. Additionally, output data associated with the operations of the control system 100 and/or a plant or other system monitored by the control system 100 may be communicated to the workstations 130 by the controller 105 for output and/or display to a user.

As desired, embodiments of the invention may include a control system 100 with more or less than the components illustrated in FIG. 1. The control system 100 of FIG. 1 is provided by way of example only.

### Fieldbus Synchronization

FIG. 2 is a flow chart of one example method 200 for synchronizing Fieldbus devices and an external control system, according to an illustrative embodiment of the invention. The method 200 may be performed by a suitable controller associated with a control system, such as the controller 105 associated with the control system 100 of FIG. 1. The method may begin at block 205.

At block 205, any number of Fieldbus devices and/or linking devices, such as the Fieldbus devices 115a-n and/or linking devices 110a-n illustrated in FIG. 1, may be initialized. Additionally, communications between the Fieldbus devices 115a-n and/or linking devices 1 10a-n and the controller 105 may be established.

At block 210, a timing message or synchronization message may be received. For example, a timing message may be received from a linking device 110 that includes timing information for one or more segments associated with the linking device 110. As another example, a timing message may be directly received from an applicable Fieldbus device 115. Although certain embodiments of the invention may include one or more Fieldbus devices that are in direct communication with a controller 105, the remainder of the method 200 of FIG. 2 will be described in association with Fieldbus devices that are in communication with the controller 105 via a linking device 105. A wide variety of timing information may be received as desired in various embodiments of the invention, such as a start time for a current operation cycle of a segment or Fieldbus device 115 or a current time within a current operation cycle.

At block 215, one or more applicable segments or links associated with the linking device 110 may be identified based upon the information included in the received timing message. For example, one or more segments of the linking device 110 that are activated and/or to which at least one Fieldbus device is connected may be identified. Operations may then continue at block 220 and a next segment may be identified for processing.

At block 225, operation cycle information for the segment may be accessed or otherwise obtained. For example, operation cycle information may be accessed from memory or obtained from an external data source. As another example, operation cycle information for the segment may be identified or parsed from the received timing message and/or another received message. A wide variety of information associated with the operation cycle for the segment may be accessed or obtained, such as a duration or length of the operation cycle for the segment.

At block 230, a start time for the current operation cycle of the segment may be determined or identified based upon the information included in the received timing message. For example, a start time of the current operation cycle may be determined by subtracting a timing value included in the timing message (e.g., a value representing a current time within the operation cycle) and, as desired, an estimated network delay time, from a current time (e.g., a clock time) associated with the controller 105. As another example, a start time of the current operation cycle may be determined by identifying start time information included in the timing message.

At block 235, the determined start time and the duration information for the operation cycle may be utilized in order to determine a specific time at which controller functionality should be executed by the controller 105 for the segment and/or Fieldbus devices connected to the segment. For example, a timing offset for executing controller functionality or a specific clock value at which controller functionality should be executed may be determined. The determined specific time may be a time at which control operations for the segment and/or devices will be performed such that any control signals or other messages output by the controller 105 will be received by the segment and/or devices connected to the segment within the current operation cycle or the current macrocycle. In this regard, the operations of the controller 105 and the segment may be synchronized.

At block 240, a determination may be made as to whether the current segment is the last available segment. If it is determined at block 240 that the segment is not the last available segment for the linking device 110, then operation may continue at block 220 and a next segment may be identified for processing. If, however, it is determined at block 240 that the current segment is the last available segment, then operations may continue at block 245.

At block 245, controller functionality for the segments and/or connected Fieldbus devices may be executed. For example, once the determined specific time for a segment is reached, the controller 105 may execute controller functionality for the segment and/or any devices connected to the segment. In doing so, the controller 105 may process any inputs that are received from the segment and/or connected Fieldbus devices (e.g., measurements data, event data, etc.) and/or generate any number of suitable control signals and/or other messages for output to the segment and/or connected Fieldbus devices. The controller 105 may then direct the communication of any generated signals and/or messages to designated recipients.

The method 200 may end following block 245.

Although the method 200 set forth in FIG. 2 describes an iterative method for processing segments associated with a linking device 110 and synchronizing the controller 105 with each segment, in certain embodiments, one or more segments may be processed in parallel. Additionally, as desired, the method 200 may be utilized in association with any number of linking devices.

The operations described in the method 200 of FIG. 2 do not necessarily have to be performed in the order set forth in FIG. 2, but instead may be performed in any suitable order. Additionally, in certain embodiments of the invention, more or less than all of the elements or operations set forth in FIG. 2 may be performed.

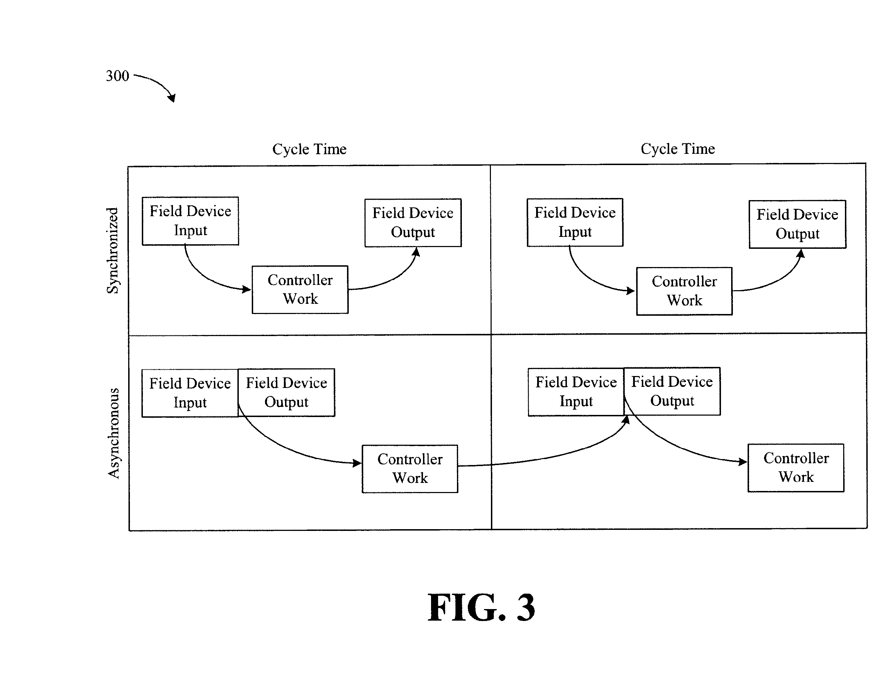

FIG. 3 is an illustration 300 of one example synchronization that may be achieved in accordance with various embodiments of the invention. As illustrated in FIG. 3, embodiment of the invention may facilitate the synchronization of an external controller, such as the controller 105 illustrated in FIG. 1, and a connected Fieldbus device, such as a Fieldbus device 115 illustrated in FIG. 1. By synchronizing a Fieldbus device 115 and the controller, inputs may be received from the Fieldbus device 115 and processed by the controller 105 such that outputs may be communicated by the controller 105 to the Fieldbus device 115 and received by the Fieldbus device 115 within a single operation cycle or macrocycle. In this regard, proper timing between the functionality of the controller 105 and the functionality of the Fieldbus device 115 may be provided.

In contrast, in an asynchronous timing method (also illustrated in FIG. 3), a controller may execute control functionality for a Fieldbus device at a point in time such that any output control messages or signals are not received by the Fieldbus device within the same operation cycle. As a result, the Fieldbus device may not receive desired inputs prior to executing its own functionality, thereby leading to timing errors and/or data errors between the Fieldbus device and the controller. In some cases, a controller may operate at up to two operation cycles or macrocycles behind the connected Fieldbus device. By synchronizing the controller and Fieldbus device in accordance with various embodiments of the invention, these timing errors may be reduced or eliminated.

### Fieldbus Communication

FIG. 4 is a flow chart of one example method 400 for communicating a command received from an external computer to a Fieldbus device, according to an illustrative embodiment of the invention. The method 400 may be performed by a suitable controller associated with a control system, such as the controller 105 associated with the control system 100 of FIG. 1. The method may begin at block 405.

At block 405, a command associated with the operation of the control system 100 may be received from a human machine interface (HMI) computer, such as one of the workstations 130 illustrated in FIG. 1. The command may be received via any number of suitable networks and/or network connections, such as via a network that is similar to the networks 120 described above with reference to FIG. 1. Additionally, the received command may be formatted in accordance with a protocol other than a Fieldbus protocol. For example, in certain embodiments, the received command may be formatted in accordance with an EGD protocol or another suitable protocol.

At block 410, a determination may be made as to whether the command is a command for a Fieldbus device, such as one of the Fieldbus devices 115a-n illustrated in FIG. 1. In certain embodiments, information included in the command may be analyzed in order to determine whether the command is a command for a Fieldbus device 115. For example, a device identifier included in the command may be identified, and a determination may be made as to whether the device identifier is associated with a Fieldbus device 115. As another example, a variable or parameter included in or identified by the command may be analyzed, and a determination may be made as to whether the variable is associated with a Fieldbus device 115. For example, a variable included in the command may be utilized to access or search a database or lookup table that includes variables associated with any number of Fieldbus devices 115a-n. Based upon the identification of a match, a Fieldbus device 115 associated with the variable may be identified. If it is determined at block 410 that the command is not a command for a Fieldbus device 410, then the method 400 may end. However, if it is determined at block 410 that the command is a command for a Fieldbus device 115, then operations may continue at block 415 and the Fieldbus device 115 associated with the command may be identified. For example, a device identifier or a variable included in the command may be utilized to identify the Fieldbus device 115 associated with the command.

At block 420, a Fieldbus command for the identified Fieldbus device 115 may be generated based upon the command received from the HMI computer. For example, information included in the received command and/or stored information associated with a variable or parameter identified by the received command (e.g., an identifier of the Fieldbus device 115, a memory location of the Fieldbus device 115 that is associated with the variable, etc.) may be utilized to generate a Fieldbus command that is formatted in accordance with the Fieldbus protocol. In this regard, the command received from the HMI computer may be converted or translated into a command formatted in accordance with the Fieldbus protocol.

At block 425, the generated Fieldbus command may be output for communication to the Fieldbus device 115. For example, the Fieldbus command may be communicated directly to a Fieldbus device 115. As another example, the Fieldbus command may be communicated to a linking device 110 for delivery to a Fieldbus device 115.

The method 400 may end following either block 410 or 425.

A wide variety of command may be received from an HMI computer and processed by the controller 105 and/or the communications module 149. One example of a suitable command that may be processed is a command to write a value to a Fieldbus device. FIG. 5 is a flow chart of one example method 500 for facilitating the writing of a value to a Fieldbus device by an external computer, according to an illustrative embodiment of the invention. The method 500 may be performed by a suitable controller associated with a control system, such as the controller 105 associated with the control system 100 of FIG. 1. The method may begin at block 505.

At block 505, command to write a value to a Fieldbus device, such as a Fieldbus device 115 illustrated in FIG. 1, may be received from a human machine interface (HMI) computer, such as one of the workstations 130 illustrated in FIG. 1. The command may be received via any number of suitable networks and/or network connections, such as via a network that is similar to the networks 120 described above with reference to FIG. 1. Additionally, the received command may be formatted in accordance with a protocol other than a Fieldbus protocol. For example, in certain embodiments, the received command may be formatted in accordance with an EGD protocol or another suitable protocol.

At block 510, a variable or parameter associated with the received write command may be identified. For example, a variable or parameter to which a value is desired to be written may be identified. At block 515, a determination may be made as to whether a Fieldbus device 115 is identified based upon the variable. For example, the variable may be utilized to search or access a lookup table or database of variables associated with Fieldbus devices 115a-n, and a determination may be made that the variable is associated with a Fieldbus device 115 if a match is found. If it is determined at block 515 that no Fieldbus device is identified by or associated with the variable, then operations may end. If, however, it is determined at block 515 that a Fieldbus device 115 is identified by or associated with the variable, then operations may continue at block 520.

At block 520, a determination may be made as to whether writing to the identified variable is allowed or permitted. In certain embodiments, a determination may be made as to whether the HMI computer has permission or access rights to write a value to the identified variable. For example, stored information associated with write permission and/or access writes may be examined in order to determine whether writing to the identified variable is allowed or permitted. If it is determined at block 520 that writing to the identified variable is not allowed, then operations may end. If, however, it is determined at block 520 that writing to the variable is permitted, then operations may continue at block 525.

At block 525, a second write command for the variable may be generated utilizing the Fieldbus protocol. As, desired, the generation of the second write command may be based upon the command received from the HMI computer. For example, information included in the received write command may be utilized to generate a Fieldbus write command. Additionally, as desired, stored information associated with the identified variable or parameter, such as an identifier of the Fieldbus device 115 and/or a memory location or memory address of the Fieldbus device 115 at which a value of the variable is stored, may be utilized to generate the Fieldbus write. In this regard, the command received from the HMI computer may be converted or translated into a command formatted in accordance with the Fieldbus protocol.

At block 530, the generated Fieldbus write command may be output for communication to the Fieldbus device 115. For example, the Fieldbus write command may be communicated directly to the Fieldbus device 115. As another example, the Fieldbus command may be communicated to a linking device 110 for delivery to the Fieldbus device 115.

Embodiments of the invention may facilitate the writing, by an HMI computer, of values to a wide variety of different variables or parameters associated with a Fieldbus device 115. For example, embodiments of the invention may facilitate the writing of a value to an operating mode or operational mode associated with a Fieldbus device 115. In this regard, the HMI computer may be utilized to set an operating mode of the Fieldbus device 115. For example, an operating mode may be set to one of a manual operating mode, an out of service operating mode, an automatic operating mode, or any other suitable operating mode.

At block 535, which may be optional in certain embodiments of the invention, information associated with the operation of the Fieldbus device 115 may be received by the controller 105. For example, measurements data and/or data associated with the values of one or more variables and/or parameters for the Fieldbus device 115 may be received. The received information may be formatted in accordance with the Fieldbus protocol.

At block 540, which may be optional in certain embodiments of the invention, at least a portion of the received information may be utilized to generate a message for output to the HMI computer. For example, a message that includes an updated value of the variable that was written to may be generated. The generated message may be formatted in accordance with a protocol other than the Fieldbus protocol, such as an EGD protocol. Once generated, the message may be output at block 545 for communication to the HMI computer and/or presentation to a user of the HMI computer. In this regard, the controller 105 may function as a gateway device that facilitates communications between the Fieldbus device 115 and the HMI computer. Although the communications from the Fieldbus device 115 to the HMI computer are described in FIG. 5 as occurring after a variable associated with the Fieldbus device is written to, in certain embodiments of the invention, information associated with variable values and/or measurements data may additionally or alternatively be communicated to the HMI computer prior to receiving a command to write a value to the Fieldbus device 115.

The method may end following either block 515, 520, or 545.

The operations described in the methods 400, 500 of FIGS. 4 and 5 do not necessarily have to be performed in the order set forth in FIGS. 4 and 5, but instead may be performed in any suitable order. Additionally, in certain embodiments of the invention, more or less than all of the elements or operations set forth in FIGS. 4 and 5 may be performed.

Although the methods 400, 500 of FIGS. 4 and 5 describe the receipt of commands for Fieldbus devices 115a-n, similar operations may be performed as desired to receive and process commands for one or more linking devices 1 10a-n.

### Identification of Fieldbus Devices

FIG. 6 is a flow chart of one example method 600 for identifying Fieldbus devices within a control system, according to an illustrative embodiment of the invention. The method 600 may be performed by a suitable controller associated with a control system, such as the controller 105 associated with the control system 100 of FIG. 1. The method may begin at block 605.

At block 605, one or more linking devices and/or associated Fieldbus devices, such as the linking devices 110a-n and Fieldbus devices 115a-n may be connected to a control system 100 and/or initialized. For example, any number of Fieldbus devices 115a-n, such as H1 devices, may be connected to a linking device 110 via suitable Fieldbus data bus and/or other suitable network connections. The linking device 110, which may be a suitable H1/HSE device, may then be connected to a central controller 105 of the control system 100 via any number of suitable network connections. Once the linking devices 110a-n have been connected to the controller 105, each linking device 110a-n may periodically communicate an annunciation or status message to the controller 105. As desired, the time period for communicating an annunciation message may be established by various user parameters and a wide variety of timer periods may be utilized in accordance with various embodiments of the invention. These messages may be utilized to generate and/or dynamically update a list of linking devices 110a-n and Fieldbus devices 115a-n that are connected to the controller 105.

At block 610, a next linking device 110 may be selected from a group of one or more linking devices 110a-n that are connected to the controller 105. For example, the next linking device 110 may be selected from a group of one or more linking devices 1 10an that have communicated a respective annunciation message to the controller 105. At block 615, an annunciation message received from the selected linking device 110 may be identified. In certain embodiments, the identified annunciation message may be stored for subsequent use in detecting changes in a list of connected Fieldbus devices 115a-n, as described in greater detail below with reference to FIG. 7.

The received annunciation message for the selected linking devices 110 may include a wide variety of information associated with one or more segments for the linking device 110. Each segment may be a branch or communications branch of the linking device 110 that facilitates communication between the linking device 110 and any number of Fieldbus devices 115a-n. For example, each segment may be connected to a Fieldbus data bus or local network that facilitates communication between the linking device 110 and various Fieldbus devices 115a-n. In certain embodiments, a linking device 110 may include four segments, although linking devices may be provided with any number of segments. The annunciation message may include a wide variety of information associated with the linking device segments. For example, the annunciation message may include a version number or other identifier for each segment. In certain embodiments, the version number may identify the segment, an indication of whether the segment is in use, an indication of whether any Fieldbus devices are connected to the segment, a number of connected Fieldbus devices, and/or other information as desired.

At block 620, the received annunciation message may be parsed or otherwise analyzed in order to identify the active segments associated with the linking device 110. Each identified segment may then be analyzed in order to identify or determine the respective Fieldbus devices that are connected to the segment. At block 625, a next segment for the selected linking device 110 may be identified and selected. A query message may then be generated for the selected segment at block 630. The generated query message may request information associated with Fieldbus devices 115a-n that are connected to the segment. A wide variety of information may be requested as desired in various embodiments of the invention, such as identifiers and/or version numbers for the Fieldbus devices 115a-n. Alternatively, the query message may request a standardized status message for the segment that includes information associated with the Fieldbus devices connected to the segment. Once generated, the query message may be communicated to the segment.

At block 635, a response to the query message may be received. The response may include a message identifying the Fieldbus devices 115a-n that are connected to the segment. In certain embodiments, the response may include identifying information for the segment, identifiers for each connected Fieldbus device 115, an indication of whether the Fieldbus device 115 is active, and/or any other suitable information associated with the Fieldbus device 115. As desired, the received message may be parsed or otherwise analyzed in order to identify the one or more Fieldbus devices 115a-n connected to the segment. Each identified Fieldbus device 115 may then be analyzed in order to obtain additional information associated with the Fieldbus device 115.

At block 640, a next Fieldbus device 115 may be identified and/or selected. A device query message may then be generated for the selected Fieldbus device 115 at block 645. The generated device query message may request a wide variety of information for the Fieldbus device 115 as desired in various embodiments, including but not limited to, a device identifier, a user tag for the device 115, a manufacturer identifier, a device type, a device revision identifier, a device description revision, one or more function block revisions, and/or any other suitable information. Once generated, the device query message may be transmitted or otherwise communicated to the Fieldbus device 115. For example, the device query message may be communicated to the linking device 110, and the linking device 110 may communicate the device query message to the Fieldbus device 115.

At block 650, a response to the device query message may be received. The received response message may be generated by the Fieldbus device 115 and may include a wide variety of information associated with the Fieldbus device 115, such as a portion or all of the information described above with reference to block 645. In this regard, accurate information associated with the Fieldbus device 115 and/or its operation may be collected by the controller 105.

At block 655, a determination may be made as to whether the selected Fieldbus device 115 is the last Fieldbus device connected to the selected segment. If it is determined at block 655 that the Fieldbus device 115 is not the last device connected to the segment, then operations may continue at block 640 and a next Fieldbus device may be identified or selected for processing. In this regard, information associated with each Fieldbus device connected to the segment may be collected or otherwise obtained by the controller 105. If, however, it is determined at block 655 that the selected Fieldbus device 115 is the last Fieldbus device connected to the segment, then operations may continue at block 660.

At block 660, a determination may be made as to whether the selected segment is the last active segment for the selected linking device 110. If it is determined at block 660 that the segment is not the last segment, then operations may continue at block 625 and a next segment may be identified or selected for processing. In this regard, information associated with each segment of a linking device may be collected or otherwise obtained by the controller 105. If, however, it is determined at block 660 that the selected segment is the last segment of the linking device, then operations may continue at block 665.

At block 665, a determination may be made as to whether the selected linking device 110 is the last linking device connected to the controller 105. If it is determined at block 665 that the linking device 110 is not the last linking device, then operations may continue at block 610 and a next linking device may be identified or selected for processing. In this regard, information associated with each connected linking device 110a-n may be collected or otherwise obtained by the controller 105. If, however, it is determined at block 665 that the selected linking device 110 is the last linking device, then operations may continue at block 670.

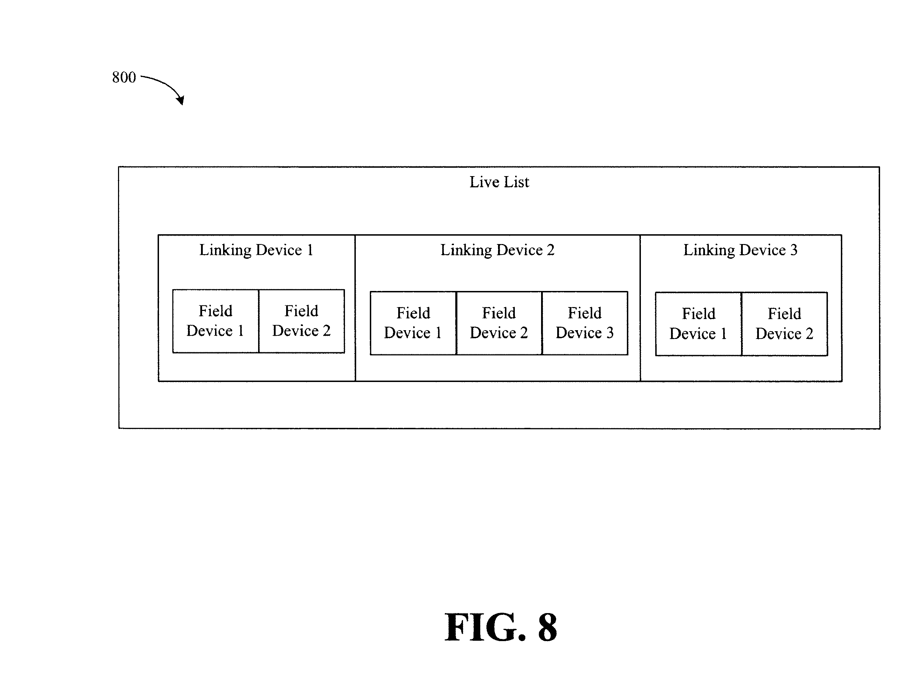

At block 675, a list of the Fieldbus device 115a-n that are connected to and/or operative within the control system 100 may be prepared or generated. A wide variety of information may be included in a generated list, such as identifying information and/or operating information for each linking device 110a-n, segment, and/or Fieldbus device 115a-n. In certain embodiments, one or more presentations associated with the generated list, such as one or more graphical user interfaces, may be prepared or generated. A presentation may provide a visual representation of the connected Fieldbus devices 115a-n and/or their operation. As desired, a presentation may be formatted utilizing a wide variety of different techniques and/or layouts. Once example presentation layout is described in greater detail below with reference to FIG. 8.

As desired, the generated list and/or presentations may be transmitted or otherwise communicated by the controller 105 to one or more recipients, such as to the one or more workstation computers 130 illustrated in FIG. 1. In certain embodiments, the generated list and/or presentations may be communicated in accordance with a protocol associated with the control system 100. In this regard, an operator of the control system 100 may be provided with information associated with the connected Fieldbus devices 115a-n. Accordingly, the operator may assign one or more of the Fieldbus devices 115a-n in a proper or correct manner. Additionally, the operator may conduct or perform any number of diagnostics on the Fieldbus devices 115a-n and/or determine whether the Fieldbus devices 115a-n are operating properly.

The method 600 may end following block 670.

Although the method 600 set forth in FIG. 6 describes an iterative method for processing linking devices and collecting information associated with various linking device segments and/or Fieldbus devices connected to the segments, in certain embodiments, one or more linking devices, segments, and/or Fieldbus devices may be processed in parallel. For example, query messages for multiple segments of a linking device may be generated and/or communicated in parallel. As another example, device query messages for multiple Fieldbus devices connected to a segment may be generated and/or communicated in parallel.

FIG. 7 is a flow chart of one example method for updating a list of Fieldbus devices within a control system, according to an illustrative embodiment of the invention. The method 700 may be performed by a suitable controller associated with a control system, such as the controller 105 associated with the control system 100 FIG. 1. The method 700 may begin at block 705.

At block 705, a point in time at which an annunciation or status message should be received from a linking device 110 may be identified. In certain embodiments, a timing threshold for receiving annunciation messages that are periodically output from a linking device may be identified. Based upon the timing that a last annunciation message was received from the linking device 110 and the timing threshold, a point in time at which a subsequent annunciation message should be received may be determined. As desired, an identified point in time may permit for a certain amount of error in receiving an annunciation message, such as transmission delays, limited connectivity errors, and/or a failure of a linking device to output a message. In certain embodiments, a controller 105 may be alternatively configured to request an annunciation message from the linking device 110 and determine whether a response is received.

At block 710, a determination may be made as to whether an expected annunciation message has been received from the linking device 710. If it is determined at block 710 that an annunciation message has not been received, then operations may continue at block 715 and a determination may be made that the linking device 110 is no longer connected to the controller 105 and/or the control system 100. Operations may then continue at block 780 described in greater detail below and a list and/or presentations associated with the Fieldbus devices 115a-n connected to the control system 100 may be updated.

If, however, it is determined at block 710 that an annunciation message has been received from the linking device 710, then operations may continue at block 720. At block 720, information included in the received annunciation message may be compared to stored information for an annunciation message that was previously received from the linking device 110. Based upon the comparison, a determination may be made as to whether information associated with the segments of the linking device 110 has changed. For example, if there are differences between the received annunciation message and a stored annunciation, then it may be determined that information for one or more segments of the linking device 110 have changed. At block 725, a determination may be made as to whether there is a difference between the received annunciation message and stored information for a previously received annunciation message. If a difference is not identified at block 725, then operations may continue at block 730 and it may be determined that no updates to the list of Fieldbus devices connected to the linking device 110 is necessary. The method may end following block 730.

If, however, a difference is identified at block 725, then operations may continue at block 735. At block 735, a segment in which a change has occurred may be identified. For example, a version number for each segment may be compared to a respective stored version number for each segment. By identifying a difference between a version number received in the annunciation message and a respective stored version, a segment that has changed may be identified. Although block 735 describes the identification of a change within a single segment, a change may be identified in more than one segment in a similar manner. Additionally, a change in the version number or other information included in the annunciation message may be utilized to identify a newly activated segment associated with the linking device 110.

At block 740, a query message may be generated and communicated to the identified segment in a similar manner as that described above with reference to block 630 of FIG. 6. A determination may then be made at block 745 as to whether a response to the communicated query message is received. For example, a determination may be made as to whether a response is received within a timing threshold or predetermined period of time. If it is determined at block 745 that no response is received, then operations may continue at block 750 and a determination may be made that the segment is no longer active and/or connected to the controller 105 via the linking device 110. Operations may then continue at block 780 described in greater detail below and a list and/or presentations associated with the Fieldbus devices 115a-n connected to the control system 100 may be updated.

If, however, it is determined at block 745 that a response to the query message has been received, then operations may continue at block 755. At block 755, the received response may be compared to stored information associated with a previously received response for the segment, such as a response that is stored following block 650 of FIG. 6. Based upon the comparison at block 755, a Fieldbus device 115 in which a change has occurred may be identified. For example, a Fieldbus device 115 that has been changed may be identified by identifying a difference between a received query response and respective stored query response for the segment. Although block 755 describes the identification of a change within a single Fieldbus device, a change may be identified in more than one Fieldbus device in a similar manner. Additionally, a newly activated or connected Fieldbus device may be identified in a similar manner.

At block 760, a device query message for the identified Fieldbus device 115 may be generated and communicated to the Fieldbus device 115 in a similar manner as that set forth above with reference to block 645 of FIG. 6. A determination may then be made at block 765 as to whether a response to the communicated device query message is received. For example, a determination may be made as to whether a response is received within a timing threshold or predetermined period of time. If it is determined at block 765 that no response is received, then operations may continue at block 770 and a determination may be made that the Fieldbus device 115 is no longer active and/or connected to the controller 105 via the linking device 110. Operations may then continue at block 780 described in greater detail below and a list and/or presentations associated with the Fieldbus devices 115a-n connected to the control system 100 may be updated.

If, however, it is determined at block 765 that a response to the device query message has been received, then operations may continue at block 775. At block 775, the received response may be analyzed and/or otherwise utilized to identify information associated with the Fieldbus device 115. In this regard, changes in the operation of the Fieldbus device 115 may be identified. Operations may then continue at block 780.

At block 780, a list and/or presentations associated with the Fieldbus devices 115a-n connected to the control system 100 may be updated. For example, newly connected Fieldbus devices and/or newly disconnected Fieldbus devices may be identified. In the event that a linking device or segment is identified as being disconnected (and no redundant linking devices and/or segments are available), a determination may be made that each of the Fieldbus devices connected to the linking device or segment is no longer connected. Additionally, changes in the operations of one or more Fieldbus devices may be identified. Based upon identified changes, a list and/or presentations of Fieldbus devices, such as the list initially generated at block 670 of FIG. 6, may be updated or revised. In this regard, a relatively accurate list of connected Fieldbus devices may be dynamically maintained.

As desired, an updated list and/or presentations may be communicated to one or more recipients, such as the workstation computers 130 illustrated in FIG. 1. In certain embodiments, updated information may be communicated to a recipient when a change is identified. In other embodiments, and indication that change has occurred may be communicated to a recipient, and updated information may subsequently be communicated to the recipient based upon a received request for the updated information. In still other embodiments, updated information may be periodically communicated to a recipient or communicated based upon the receipt of a request for updated information.

The method 700 may end following either block 715, 730, 750, or 770.

Although the method 700 of FIG. 7 describes operations with respect to a single linking device 110, similar operations may be performed as desired for other linking devices 110a-n connected to the controller 105. In this regard, a list of Fieldbus devices 115a-n that are connected to the controller 105 may be dynamically determined and updated. Additionally, in certain embodiments, an annunciation message may be received from a new linking device, and a list of segments and Fieldbus devices associated with the linking device may be determined and utilized to update a previously generate list of linking devices 115a-n associated connected within the control system 100.

The operations described in the methods 600, 700 of FIGS. 6 and 7 do not necessarily have to be performed in the order set forth in FIGS. 6 and 7, but instead may be performed in any suitable order. Additionally, in certain embodiments of the invention, more or less than all of the elements or operations set forth in FIGS. 6 and 7 may be performed.

FIG. 8 is an illustration of one example presentation 800 of connected Fieldbus devices that may be generated in accordance with various embodiments of the invention. As illustrated in FIG. 8, a generated presentation 800 may be a live list or dynamically generated list or graphical presentation that illustrates the linking devices 110a-n, segments, and/or Fieldbus devices 115a-n that are connected to a controller 105 and/or connected within a control system 100.

With reference to FIG. 8, the example presentation 800 illustrates three linking devices that are connected to a controller 105. Two Fieldbus devices are connected to the first linking device, three Fieldbus devices are connected to the second linking device, and three Fieldbus devices are connected to the third linking devices. By utilizing the example presentation 800 of FIG. 8, a user of a workstation (e.g., an operator of the control system 100) may identify connected linking devices 110a-n and/or Fieldbus devices 115a-n. In this regard, the user may assign the various Fieldbus devices 115a-n and/or perform various diagnostics associated with the control system 100.

The presentation 800 illustrated in FIG. 8 is provided by way of example only. As desired in various embodiments of the invention, a wide variety of different presentations may be generated and/or provided to a recipient system or device. These presentations may utilize a wide variety of different layouts and/or include a wide variety of different information.

### Redundant Linking Devices

In certain embodiments of the invention, a plurality of redundant linking devices may be provided in order to facilitate communication between the Fieldbus devices and an external controller, such as the controller 105 illustrated in FIG. 1. For example, a primary linking device and a secondary linking device may be provided. The primary linking device may detect a loss in network connectivity with the controller 105 and direct a switching or switchover of communications control to the secondary linking device. In certain embodiments, the switching may be directed based upon an additional determination that network connectivity exists between the secondary linking device and the external controller. As desired in certain embodiments, the secondary linking device may be established as a primary device following the switchover.

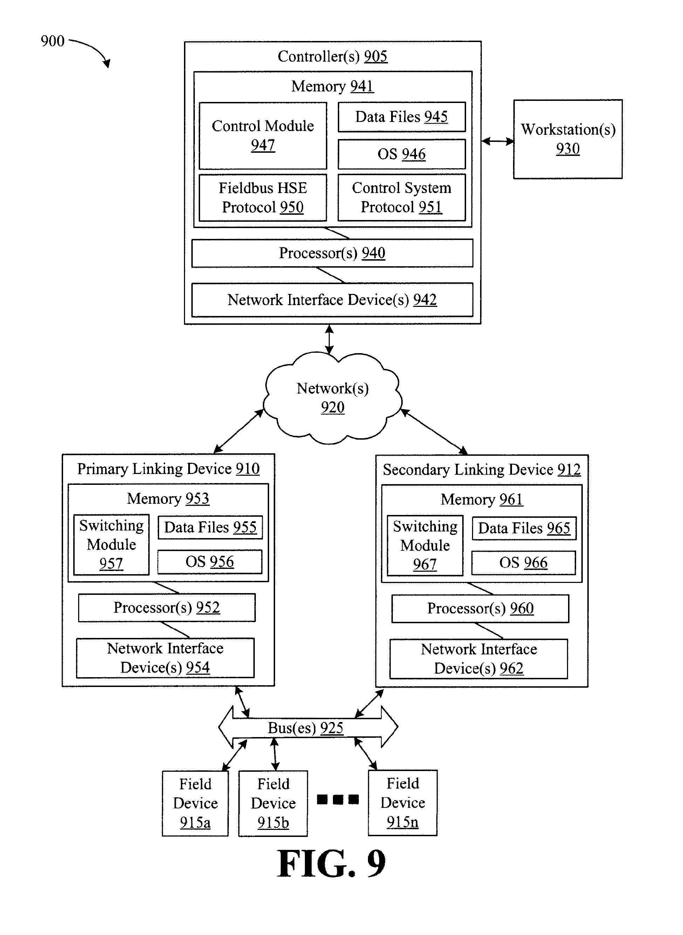

FIG. 9 is a block diagram of one example control system 900 that may be utilized in accordance with various embodiments of the invention. The control system 900 may include one or more controllers 905 (e.g., central controllers) and/or control devices, a first linking device 910, a second linking device 912, and/or one or more Fieldbus devices 915a-n. The controller 905 may communicate with the linking devices 910, 912 via one or more suitable networks 920 or communications buses. Additionally, the linking devices 910, 912 may communicate with the Fieldbus devices 915a-n via one or more suitable buses 925 or networks.

As desired, any number of linking devices, including the first linking device 910 and the second linking device 912, may be utilized in association with the control system 900. Each linking device may be similar to the linking device 110 described above with reference to FIG. 1. According to an aspect of the invention, the linking devices 910, 912 may provide redundant communications capability and/or connectivity between the controller 905 and the Fieldbus devices 915a-n. For example, a first linking device 910 or primary linking device may control communications between the controller 905 and the Fieldbus devices 915a-n connected to the primary linking device 910. Based upon a determination by the primary linking device 910 that network connectivity with the controller 905 is lost, the primary linking device 910 may be configured to switchover communications control to the second linking device 912 or a secondary linking device. In certain embodiments, the switchover of communications control may further be based upon a determination by the primary linking device 910 that network connectivity still exists between the secondary linking device 910 and the controller 905.

In operation, a linking device, such as the primary linking device 910, may be configured to transmit or output a message, such as a timing message, multicast message, etc., for communication to the controller 905. For example, a timing message or multicast message may be periodically output in accordance with a predetermined or preset time interval. A wide variety of time intervals may be utilized as desired in various embodiments of the invention, such as a time interval of approximately five hundred (500) milliseconds. In certain embodiments, the time interval may be set or established by the controller 905 or by a user of the linking device 910. As desired in certain embodiments, the primary linking device 910 may also direct a secondary linking device 912 to output a second timing message. Alternatively, the secondary linking device 912 may be configured to periodically output a second timing message in a similar manner as the primary linking device 910.

Following the output of the timing message, the primary linking device 910 may determine whether a response to the message is received from the controller 905. For example, the linking device 910 may determine whether a response is received within a particular timing threshold period or prior to the expiration of a timer that is initiated by the linking device 910 when the message is output. A wide variety of timing thresholds and/or initial timer values may be utilized as desired in various embodiments of the invention. If it is determined that a response is received, then the linking device 910 may maintain its current state of operation. However, if it is determined that no response is received, then the primary linking device 910 may direct a switching or switchover of communications control to the secondary linking device 912. As desired, the primary linking device 910 may determine whether network connectivity between the secondary linking device 912 and the controller 905 exists prior to initiating or directing a switchover. For example, the primary linking device 910 may query the secondary linking device 912 in order to determine whether the secondary linking device 912 received a response from the controller 905 to a second timing message that was output by the secondary linking device 912. Based upon a response to the query, the primary linking device 910 may determine whether a second timing message was output by the secondary linking device 912 and/or whether a response to the second timing message was received. If it is determined that no response to the second timing message was received by the secondary linking device 912, then the primary linking device 910 may not perform a switchover and, as desired, may generate an error message or take some other control action in order to indicate that network connectivity has been lost. However, if it is determined that a response to the second timing message was received by the secondary linking device 912, then the primary linking device 910 may direct a switchover of communications control to the secondary linking device 912. For example, the secondary linking device 912 may be designated as a new primary linking device. In this regard, network connectivity between the controller 905 and the Fieldbus devices 915a-n may be maintained even if network connectivity with the primary linking device 910 is lost.

With continued reference to FIG. 9, any number of Fieldbus devices 115a-n may be utilized in association with the control system 900. In certain embodiments, each Fieldbus device (generally referred to as device 915) may be in communication with one or more linking devices 910, 912 via a local Fieldbus network or data bus 925. In this regard, communications between the Fieldbus device 915 and the controller 905 may be facilitated by one or more of the linking devices 910, 912. A wide variety of different types of Fieldbus devices may be utilized as desired in various embodiments of the invention, including any number of H1 Fieldbus devices and/or other suitable devices. In certain embodiments, the Fieldbus devices 915a-n may be distributed or situated at varying points within a power plant or process plant. In this regard, the Fieldbus devices 915a-n may be utilized to monitor and/or control various aspects and/or operations of a plant. In certain embodiments, communications between the linking devices 910, 912 and the Fieldbus devices 915a-n may be facilitated using the Fieldbus protocol.

With continued reference to FIG. 9, the one or more illustrated networks 920 may include any suitable network or combination of networks that facilitate communications between the linking devices 910, 912 and the controller 905. Similarly, the Fieldbus data buses 925 or networks may include any number of suitable data buses and/or local area networks that facilitate communication between a linking device 910, 912 and Fieldbus devices 915a-n that are connected to the linking device 910, 912. Examples of suitable networks and/or data buses include, but are not limited to, a local area network, a wide area network, the Internet, a radio frequency (RF) network, a Bluetooth™ enabled network, any suitable wired network, any suitable wireless network, or any suitable combination of wired and wireless networks. In certain embodiments of the invention, such as embodiments that utilize an Ethernet network, one or more Ethernet switches may be provided. The Ethernet switches may route data within the network 920. Each of the Ethernet switches may include hardware and/or software components that are operable to facilitate the routing of data within the network 920. Examples of suitable Ethernet switches include, but are not limited to, network bridges, multilayer switches, etc.

With continued reference to FIG. 9, the control system 900 may include a controller 905, such as a central controller. Some examples of suitable controllers are a Mark™ VI control system and a Mark™ Vie control system produced by the General Electric Company. The controller 905 may be configured to communicate with and/or control other components of the control system 900 and/or components of the plant or system that is controlled by the control system 900. Additionally, the controller 905 may be configured to receive data associated with the operation of the Fieldbus devices 915a-n and/or the linking devices 910, 912, to process at least a portion of the received data, and/or to output one or more control signals or other messages for receipt by the linking devices 910, 912 and/or Fieldbus devices 915a-n. The controller 905 may include similar components to those described above with reference to the controller 105 of FIG. 1. As such, the controller 905 may include any number of processors 940, memory devices 941, and/or network interface devices 942. The memory devices 941 may store a wide variety of data, such as data files 945, an operating system 946, a control module 947, a Fieldbus HSE protocol 950, and/or a control system protocol 951. Each of these components may function in a similar manner at that described above with reference to FIG. 1.

With continued reference to FIG. 9, the primary linking device 910 may include any number of processor driven devices and/or processing components that facilitate the operations of the linking device 910 and/or a switching or switchover to the secondary linking device 912. For example, the primary linking device 910 may include any number of special purpose processing components, computing devices, particular machines, application specific circuits, programmable logic controllers (PLC), microcontrollers, minicomputers, and the like. In certain embodiments, the operations of the primary linking device 910 may be controlled by computer-executed or computer-implemented instructions that are executed by one or more processors or processing components associated with the primary linking device 910. The instructions may be embodied in one or more software components as desired in various embodiments of the invention. The execution of the instructions may form a special purpose computer or other particular machine that is operable to control the operations of the primary linking device 910 and/or to facilitate a switching or switchover to the secondary linking device 912. The one or more processing components that control the operations of the primary linking device 910 may be incorporated into the primary linking device 910 and/or in communication with the primary linking device 910 via one or more suitable networks. In certain embodiments of the invention, the operations and/or control of the primary linking device 910 may be distributed amongst several processing components.

The primary linking device 910 may include one or more processors 952, one or more memory devices 953, and one or more network interface device(s) 954 or communications interface devices. The one or more memory devices 953 may be any suitable memory devices, for example, caches, read only memory devices, random access memory devices, magnetic storage devices, etc. The one or more memory devices 953 may store data utilized by the primary linking device 910, for example, data 955 associated with the operation of the primary linking device 910, data associated with the controller 905, data associated with the Fieldbus devices 915a-n, data associated with the output of timing messages, etc. Additionally, the one or more memory devices 953 may store executable instructions, and/or various program modules utilized by the primary linking device 910, such as an operating system 956, and/or a switching module 957. Additionally, as desired, the memory 953 may be operable to store a Fieldbus or HSE protocol that facilitates communication with other components of the control system 900, such as the controller 905 and/or the Fieldbus devices 915a-n. The operating system (OS) 956, which may be optional in certain embodiments of the invention, may include executable instructions and/or program modules that facilitate and/or control the general operation of the primary linking device 910. For example, the OS 956 may facilitate the execution of other software programs and/or program modules by the processors 952.

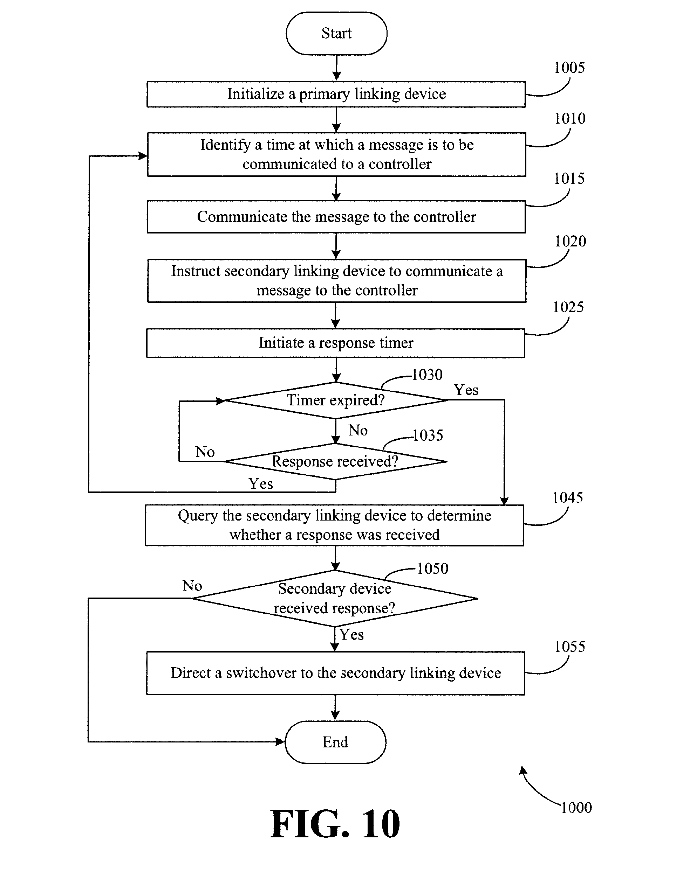

The switching module 957 may facilitate the determination or identification of a specific time or point in time at which a timing message or multicast message will be output by the primary linking device 910 and, as desired, by the secondary linking device 112. For example, the switching module 957 may determine a predetermined time interval (e.g., 500 milliseconds) for outputting a timing message, and the switching module 957 may utilize the time interval in association with a linking device clock signal in order to determine a point in time at which a timing message will be output. The switching module 957 may then direct the output of a timing message by the primary linking device 910 and, as desired, the secondary linking device 912, for communication to the controller 905. The switching module 957 may then determine whether a response to the output timing message(s) is received by the primary linking device 910 and/or the secondary linking device 912. Based upon these determinations, which are described in greater detail above and with subsequent reference to FIG. 10 below, the switching module 957 may determine whether communications control should be switched over to the secondary linking device 912. If a determination is made that a switchover should occur, then the switching module 957 may direct a switching or switchover.

An example of the operations that may be performed by a switching module 957, 967 is set forth in greater detail below with reference to FIG. 10.

With continued reference to the primary linking device 910, the network interface devices 954 may facilitate connection of the primary linking device 910 to the network 920 and/or to the Fieldbus bus(es) 925. The network interface devices 944 may include any number of input/output cards and/or other devices that facilitate network communications.

With continued reference to FIG. 9, the secondary linking device 912 may include similar components to the primary linking device 910. For example, the secondary linking device 912 may include one or more processors 960 or processing components, one or more memory devices 961, and/or one or more network interface devices 962 or communications interface devices. Each of these components may operate in a similar manner as the corresponding components of the primary linking device 910. For example, the memory devices 961 may be configured to store data files 965, an operating system 966, and/or a switching module 967 that are similar to the corresponding elements of the primary linking device 910.

In operation, the secondary linking device 912 may be configured or programmed to output a timing message or multicast message for receipt by the controller 905. In certain embodiments, a message may be periodically output in a similar manner as that described above for the primary linking device 910. In other embodiments, a message may be output at the direction of the primary linking device 910. The secondary linking device 912 may then determine whether a response to the timing message has been received from the controller 905 in a similar manner as that described above for the primary linking device 910. Based upon the determination, the secondary linking device 912 may store an indication of whether a response is received. The secondary linking device 912 may further be configured to receive a query message from the primary linking device 910 associated with whether the secondary linking device 912 received a response to the timing message, and the secondary linking device 912 may communicate an indication of whether or not a response was received to the primary linking device 910 in response to a query message. Alternatively, in certain embodiments, the secondary linking device 912 may output an indication of whether a response to a timing message was received without receiving a query message from the primary linking device 910. The primary linking device 910 may then utilize a received indication in order to determine whether communications control should be switched over to the secondary linking device 912.

In certain embodiments of the invention, one or more workstations 930 may be provided. As desired, these workstations 930 may provide a human machine interface (HMI) between the control system 900 and one or more operators of the control system 900. For example, the workstations 930 may facilitate the receipt of user input and/or user commands associated with the operation of the control system 900. In other words, the workstations 930 may facilitate user interaction with the controller 905. Additionally, the workstations 930 may be configured to receive data from the controller 905, such as presentations associated with the connected Fieldbus devices 915a-n. The workstations 930 may further be configured to display at least a portion of the received data to a user via a suitable display device, such as a monitor. The workstations 930 may include components similar to those described above for the workstations 130 of FIG. 1.

As desired, embodiments of the invention may include a control system 900 with more or less than the components illustrated in FIG. 9. The control system 900 of FIG. 9 is provided by way of example only.

FIG. 10 is a flow chart of one example method 1000 for facilitating communications between at least one Fieldbus device and an external controller or an external control system, according to an illustrative embodiment of the invention. The method 1000 may be performed by a suitable linking device, such as the primary linking device 910 or the secondary linking device 912 illustrated in FIG. 9. The method may begin at block 1005.

At block 1005, a primary linking device 910 or first linking device may be initialized. The primary linking device 910 may facilitate communications between any number of Fieldbus devices, such as the Fieldbus devices 915a-n shown in FIG. 9, and an external controller, such as the controller 905 illustrated in FIG. 9. As desired in certain embodiments, the secondary linking device 912 or second linking device may also be initialized at block 1005. The secondary linking device 912 may also facilitate communications between the Fieldbus devices 915a-n and the controller 905. For example, the secondary linking device 912 may provide redundant communication capability in addition to that provided by the primary linking device 910.

At block 1010, the primary linking device 910 may identify a specific time or a point in time at which a message, such as a timing message or multi-cast message, will be output by the primary linking device 910 for communication to the controller 905. In certain embodiments, the primary linking device 910 may be configured or programmed to output a timing message in a periodic manner. For example, a timing message may be periodically output in accordance with a predetermined time interval, such as an interval of approximately five hundred (500) milliseconds or any other suitable interval. The primary linking device 910 may utilize the predetermined time interval in order to identify a next specific time or a next point at time at which a timing message will be output.

At block 1015, the primary linking device 910 may output a timing message or multi-cast message for communication to or receipt by the controller 905. For example, the primary linking device 910 may determine that an identified specific timer or point in time has been reached, and the primary linking device 910 may output at timing message based upon the determination. At block 1020, which may be optional in certain embodiments of the invention, the primary linking device 910 may additionally direct the secondary linking device 912 to output a timing message for receipt by the controller 905. For example, the primary linking device 910 may communicate an instruction to output a timing message to the secondary linking device 912. Alternatively, the secondary linking device 912 may be configured to periodically output a timing message in a similar manner as that utilized by the primary linking device 910.

At block 1025, the primary linking device 910 may initiate a response timer. The response timer may be utilized in order to monitor a time period in which a response to the output timing message should be received from the controller 905 in order to indicate that proper network connectivity is established between the primary linking device 910 and the controller 905. In certain embodiments, the timer may be a timer that counts up from approximately zero and a value of the timer may be compared to a predetermined threshold value. In other embodiments, the timer may have an initial value that is established at a predetermined threshold, and the timer may be configured to count down to zero. In either event, the timer may be utilized in order to determine whether a response to the timing message is received within a predetermined time interval or period associated with proper network connectivity. A wide variety of time intervals or periods may be utilized as desired in various embodiments of the invention.

At block 1030, a determination may be made by the primary linking device 910 as to whether the timer has expired or whether a value of the timer has reached a threshold value. If it is determined at block 1030 that the timer has not expired or that a threshold value has not been reached, then operations may continue at block 1035. At block 1035, a determination may be made as to whether a response to the output timing message has been received from the controller 905. If it is determined at block 1035 that a response has been received, then operations may continue at block 1010 described above. However, if it is determined at block 1035 that a response has not been received, then operations may continue at block 1030 and the primary linking device 910 may continue to monitor the timer.

However, if it is determined at block 1030 that the timer has expired or that a threshold value has been reached, then it may be determined that proper network connectivity is not established between the primary linking device 910 and the controller 905. As desired, in certain embodiments, the primary linking device 910 may determine that a response is not received for a plurality of consecutive timing messages, such as two messages, three messages, etc., before the primary linking device 910 determines that proper network connectivity is not available or not established. In either case, operations may continue at block 1045 once a determination has been made that proper network connectivity between the primary linking device 910 and the controller 905 is not available or not established.

At block 1045, the primary linking device 910 may query the secondary linking device 912 in order to determine whether a response to a second timing message output by the secondary linking device 912 has been received by the secondary linking device 912 from the controller 905. For example, the primary linking device 910 may generate a query message that includes an instruction to provide data to the primary linking device that includes an indication of whether a second timing message was output by the secondary linking device 912 and/or whether a response to the second timing message has been received by the secondary linking device 912. Once generated, the query message may be output by the primary linking device 910 for communication to the secondary linking device 912. In certain embodiments, the primary linking device 910 may then receive a response to the query message from the secondary linking device 910. As an alternative to querying the secondary linking device 912, the primary linking device 910 may determine whether an indication has been received from the secondary linking device 912 as to whether a response to a second timing message has been received by the secondary linking device 910.

At block 1050, a determination may be made as to whether the secondary linking device 912 received a response to a second timing message from the controller 905. For example, a determination may be made as to whether information associated with the second timing message has been received from the secondary linking device 912 and/or whether the received information indicates that a response to the second timing message was received. In this regard, a determination may be made as to whether network connectivity is established between the secondary linking device 912 and the controller 905. If it is determined at block 1050 that the secondary linking device 912 did not receive a response to the second timing message, then operations may end without switching over communications control to the secondary linking device 912. Additionally, as desired, the primary linking device 910 may take one or more control actions in order to indicate that network connectivity between the controller 905 and the Fieldbus devices 915a-n has been lost. For example, the primary linking device 910 may output one or more network connectivity error messages for receipt by the controller 905, the workstations 930, and/or another other devices, such as a mobile device associated with an operator or supervisor of a power plant or process plant.

However, if it is determined at block 1050 that the secondary linking received a response to a second timing message, then operations may continue at block 1055. At block 1055, the primary linking device 910 may direct a switching or switchover in communications control to the secondary linking device 912. For example, the primary linking device 910 may communicate a control signal to the secondary linking device 912 that instructs the secondary linking device 912 to take over communications control. In this regard, continuous network connectivity and/or communications between the controller 905 and the Fieldbus devices 915a-n may be maintained. As desired, the secondary linking device 912 may be established as a new primary linking device. The secondary linking device 912 may then perform a portion or all of the operations set forth in the method 1000 of FIG. 10.

The method 1000 may end following either block 1050 or 1055.

Although the method 1000 set forth in FIG. 10 describes a method for switching between two linking devices 910, 912 that facilitate communications between an external controller 905 and one or more Fieldbus devices 915a-n, any number of redundant linking devices (e.g., three linking devices, four linking devices, etc.) may be utilized as desired in various embodiments of the invention. Additionally, in certain embodiments, a similar method may also be utilized for switching between redundant segments associated with a linking device 910. For example, one or more Fieldbus devices 915a-n may be connected to a plurality of segments associated with a linking device 910. Based upon a detection of a loss in network communications between a primary segment and the Fieldbus devices 915a-n, communications control may be switched or switched over to a secondary segment. In this regard, communications between the linking device 910 and the Fieldbus devices 915a-n may be maintained if there is a loss of network connectivity between the primary segment and the Fieldbus devices 915a-n.

The operations described in the method 1000 of FIG. 10 do not necessarily have to be performed in the order set forth in FIG. 10, but instead may be performed in any suitable order. Additionally, in certain embodiments of the invention, more or less than all of the elements or operations set forth in FIG. 10 may be performed.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special-purpose computer, a processor, or other programmable data processing apparatus to produce a particular machine, such that the instructions that execute on the computer, processor, or other programmable data processing apparatus create means for implementing one or more functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer readable program code or program instructions embodied therein, said computer readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims.

This written description uses examples to disclose the invention, including the preferred mode, and also to enable any person skilled in the art to practice the invention, including making and using any devices or systems and performing any incorporated methods. The patentable scope the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for identifying one or more Fieldbus devices within a control system, the method comprising:
   receiving, by a controller comprising one or more computers, one or more messages from one or more respective linking devices, wherein each of the one or more messages comprises information associated with a plurality of segments for the respective linking device, wherein each of the plurality of segments comprises a communications channel to which at least one Fieldbus device can be connected;
   analyzing, by the controller, each of the one or more received messages to identify one or more of the plurality of segments for each respective linking device to which at least one Fieldbus device is connected;
   generating, by the controller for each of the identified one or more segments, a respective query message requesting information associated with the at least one Fieldbus device connected to the segment;
   communicating, by the controller to each of the identified one or more segments, the respective query message;
   receiving, by the controller in response to the one or more query messages, one or more respective responses, each response comprising information associated with one or more Fieldbus devices connected to the segment; and
   preparing, by the controller and based upon the one or more respective responses, a listing of one or more Fieldbus devices included in the control system.
2. The method of clause 1, further comprising:
   transmitting the listing of one or more Fieldbus devices to an external computer configured to display information associated with the listing to a user.
3. The method of any preceding clause, further comprising:
   identifying a change in the listing of one or more Fieldbus devices; and
   transmitting information associated with the identified change to the external computer.
4. The method of any preceding clause, further comprising:
   storing information associated with the one or more messages received from the one or more respective linking devices.
5. The method of any preceding clause, further comprising:
   receiving, subsequent to storing information and from one of the one or more linking devices, a second message comprising information associated with the plurality of segments for the linking device;
   comparing at least a portion of the information included in the second message to at least a portion of the stored information; and
   determining, based upon the comparison, that the one or more Fieldbus devices connected to the plurality of segments for the linking device has changed.
6. The method of any preceding clause, further comprising:
   updating the listing of one or more Fieldbus devices based upon the determination that the one or more Fieldbus devices connected to the plurality of segments for the linking device has changed.
7. The method of any preceding clause, further comprising:
   identifying, based upon the comparison, a segment for the linking device in which a change has occurred;
   communicating a second query message to the identified segment;
   receiving, from the identified segment, a second response to the second query message;
   comparing at least a portion of the information included in the second response to a portion of stored information for the identified segment; and
   identifying, based upon the comparison, a change in the one or more Fieldbus devices connected to the segment.
8. The method of any preceding clause, further comprising:
   determining, subsequent to storing information and based upon an identified failure to receive a second message from one of the one or more linking devices, that the linking device is no longer connected to the control system; and
   updating the listing of one or more Fieldbus devices based upon the determination that the linking device is no longer connected.
9. The method of any preceding clause, further comprising:
   generating, for each of the connected Fieldbus devices, a respective device query message;
   communicating, to each of the connected Fieldbus devices, the respective device query message;
   receiving, in response to the one or more device query messages, one or more respective device responses, each device response comprising information associated with a respective Fieldbus device.
10. The method of any preceding clause, wherein preparing a listing of one or more Fieldbus devices comprises generating a presentation of the connected Fieldbus devices based upon the received one or more device responses.
11. A control system comprising:
   at least one memory configured to store computer-executable instructions;
   at least one processor configured to access the at least one memory and execute the computer-executable instructions to:
      receive one or more messages from one or more respective linking devices, wherein each of the one or more messages comprises information associated with a plurality of segments for the respective linking device, wherein each of the plurality of segments comprises a communications channel to which one or more Fieldbus devices can be connected;
      analyze each of the one or more received messages to identify one or more of the plurality of segments for each respective linking device to which at least one Fieldbus device is connected;
      generate, for each of the identified one or more segments, a respective query message requesting information associated with the at least one Fieldbus device connected to the segment;
      communicate, to each of the identified one or more segments, the respective query message;
      receive, in response to the one or more query messages, one or more respective responses, each response comprising information associated with one or more Fieldbus devices connected to the segment; and
      prepare, based upon the one or more respective responses, a listing of one or more Fieldbus devices included in the control system.
12. The control system of any preceding clause, wherein the at least one processor is further configured to execute the computer-executable instructions to:
   transmit the listing of one or more Fieldbus devices to an external computer configured to display information associated with the listing to a user.
13. The control system of any preceding clause, wherein the at least one processor is further configured to execute the computer-executable instructions to:
   identify a change in the listing of one or more Fieldbus devices; and
   transmit information associated with the identified change to the external computer.
14. The control system of any preceding clause, wherein the at least one processor is further configured to execute the computer-executable instructions to:
   store information associated with the one or more messages received from the one or more respective linking devices.
15. The control system of any preceding clause, wherein the at least one processor is further configured to execute the computer-executable instructions to:
   receive, subsequent to storing information and from one of the one or more linking devices, a second message comprising information associated with the plurality of segments for the linking device;
   compare at least a portion of the information included in the second message to at least a portion of the stored information; and
   determine, based upon the comparison, that the one or more Fieldbus devices connected to the plurality of segments for the linking device has changed.
16. The control system of any preceding clause, wherein the at least one processor is further configured to execute the computer-executable instructions to:
   update the listing of one or more Fieldbus devices based upon the determination that the one or more Fieldbus devices connected to the plurality of segments for the linking device has changed.
17. The control system of any preceding clause, wherein the at least one processor is further configured to execute the computer-executable instructions to:
   identify, based upon the comparison, a segment for the linking device in which a change has occurred;
   communicate a second query message to the identified segment;
   receive, from the identified segment, a second response to the second query message;
   compare at least a portion of the information included in the second response to a portion of stored information for the identified segment; and
   identify, based upon the comparison, a change in the one or more Fieldbus devices connected to the segment.
18. The control system of any preceding clause, wherein the at least one processor is further configured to execute the computer-executable instructions to:
   determine, subsequent to storing information and based upon an identified failure to receive a second message from one of the one or more linking devices, that the linking device is no longer connected to the control system; and
   update the listing of one or more Fieldbus devices based upon the determination that the linking device is no longer connected.
19. The control system of any preceding clause, wherein the at least one processor is further configured to execute the computer-executable instructions to:
   generate, for each of the connected Fieldbus devices, a respective device query message;
   communicate, to each of the connected Fieldbus devices, the respective device query message;
   receive, in response to the one or more device query messages, one or more respective device responses, each device response comprising information associated with a respective Fieldbus device.
20. The control system of any preceding clause, the listing of one or more Fieldbus devices comprises a presentation of the connected Fieldbus devices that is based upon the received one or more device responses.

## Claims

1. A method (200) for synchronizing control of Fieldbus devices (115a-n), the method comprising:
receiving (210), by a controller (105) comprising one or more computers, a message comprising timing information for at least one Fieldbus device (115) in direct or indirect communication with the controller (105);
determining (230), by the controller (105) and based upon information included in the received message, a start time for a current operation cycle of the at least one Fieldbus device (115); and
determining (235), by the controller (105) and based upon the start time and a duration of the current operation cycle, a specific time at which the controller (105) will execute control functionality for the at least one Fieldbus device (115) such that a control message output by the controller (105) will be received by the at least one Fieldbus device (115) within the current operation cycle.

2. The method (200) of Claim 1, wherein determining (230) a start time for a current operation cycle comprises:
determining, based upon the information included in the received message, a current operation time of the at least one Fieldbus device; and
determining the start time based upon the current operation time.

3. The method (200) of any preceding Claim, further comprising:
executing (245), by the controller (105), the control functionality for the at least one Fieldbus device (115); and
outputting (245), by the controller (105), at least one control message for communication to the at least one Fieldbus device (115).

4. The method (200) of any preceding Claim, further comprising:
receiving (405), from an external computer (130) by the controller (105), a first command formatted in accordance with a protocol other than a Fieldbus protocol (150);
determining (410), by the controller (105), that the received command is associated with the Fieldbus device (115);
generating (420), by the controller (105) based upon the determination and information included in the received first command, a second command formatted in accordance with the Fieldbus protocol (150); and
outputting (425), by the controller (105), the generated second command for communication to the Fieldbus device (115).

5. The method (200) of any preceding Claim, wherein determining (410) that the received first command is associated with the Fieldbus device (115) comprises:
identifying (510) a variable included in the received first command; and
determining (515) that the identified variable is associated with the Fieldbus device (115).

6. The method (200) of any preceding Claim, wherein receiving (405) a first command comprises receiving (505) a first command to write a value to a variable associated with the Fieldbus device (115), and further comprising:
determining (520), by the controller (105), that writing to the variable is permitted for the external computer (130).

7. The method (200) of any preceding Claim, further comprising:
receiving (615), by the controller (105), one or more messages from one or more respective linking devices (110a-n), wherein each of the one or more messages comprises information associated with a plurality of segments for the respective linking device (110a-n), wherein each of the plurality of segments comprises a communications channel to which one or more Fieldbus devices (115a-n) can be connected;
analyzing (620), by the controller (105), each of the one or more received messages to identify one or more of the plurality of segments for each respective linking device (110a-n) to which one or more Fieldbus devices (115a-n) are connected;
generating (630), by the controller (105) for each of the identified one or more segments, a respective query message requesting information associated with the one or more Fieldbus devices (115a-n) connected to the segment;
communicating (630), by the controller (105) to each of the identified one or more segments, the respective query message;
receiving (635), by the controller (105) in response to the one or more query messages, one or more respective responses, each response comprising information associated with the one or more Fieldbus devices (115a-n) connected to the segment; and
preparing (670), by the controller (105) and based upon the one or more respective responses, a listing of one or more Fieldbus devices (115a-n) included in the control system (100), including the at least one Fieldbus device 115.

8. The method (200) of any preceding Claim, further comprising:
storing, by the controller (105) information associated with the one or more messages received from the one or more respective linking devices (11 0a-n);
receiving (710), from one of the one or more linking devices (110a-n), a second message comprising information associated with the plurality of segments for the linking device (1 10a-n);
comparing (720) at least a portion of the information included in the second message to at least a portion of the stored information; and
determining (725), based upon the comparison, that the one or more Fieldbus devices (115a-n) connected to the plurality of segments for the linking device (110an) has changed.

9. The method (200) of any preceding Claim, further comprising:
updating (780) the listing of one or more Fieldbus devices (115a-n) based upon the determination that the one or more Fieldbus devices (115a-n) connected to the plurality of segments for the linking device (1 10a-n) has changed.

10. The method (200) of any preceding Claim, wherein a linking device (110) facilitates communication between the controller (105) and the at least one Fieldbus device (115), and wherein the linking device (110) is configured to:
communicate (1015), to the controller (105) a timing message;
determine (1035) whether a response to the timing message has been received from the controller (105); and
direct (1055), based upon the determination, switching of communications control to a second linking device (112) that facilitates communications between the controller (105) and the at least one Fieldbus device (115a-n).
